(19) Europäisches Patentamt
European Patent Office
Office européen des brevets

(11) **EP 4 763 875 A1**

(12) **EUROPEAN PATENT APPLICATION**
published in accordance with Art. 153(4) EPC

(43) Date of publication:
**24.06.2026 Bulletin 2026/26**

(21) Application number: **24889095.6**

(22) Date of filing: **05.11.2024**

(51) International Patent Classification (IPC):
**C08F 36/04** (2006.01)    **C08F 136/06** (2006.01)
**C08F 2/22** (2006.01)    **C08F 6/18** (2006.01)
**C08F 279/04** (2006.01)    **C08L 55/02** (2006.01)
**C08F 2/38** (2006.01)

(52) Cooperative Patent Classification (CPC):
**C08F 2/22; C08F 2/38; C08F 6/18; C08F 36/04;
C08F 136/06; C08F 279/04; C08L 55/02**

(86) International application number:
**PCT/KR2024/017318**

(87) International publication number:
**WO 2025/100908 (15.05.2025 Gazette 2025/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.11.2023 KR 20230151816
06.11.2023 KR 20230151817
06.11.2023 KR 20230151820
06.11.2023 KR 20230151821**

(71) Applicant: **LG Chem, Ltd.
Seoul 07336 (KR)**

(72) Inventors:
• **LEE, Jin Hyoung**
**Seoul 07796 (KR)**
• **SUK, Jaemin**
**Seoul 07796 (KR)**
• **KIM, Ki Hyun**
**Seoul 07796 (KR)**
• **BAK, Changhong**
**Seoul 07796 (KR)**
• **CHAE, Minsu**
**Seoul 07796 (KR)**
• **JEONG, Young Hwan**
**Seoul 07796 (KR)**

(74) Representative: **Vossius & Partner
Patentanwälte Rechtsanwälte mbB
Siebertstraße 3
81675 München (DE)**

(54) **DIENE-BASED RUBBERY POLYMER, AND GRAFT COPOLYMER AND THERMOPLASTIC RESIN COMPOSITION COMPRISING SAME**

(57)    The present invention relates to a diene-based rubber polymer and a graft copolymer and thermoplastic resin composition including the same. According to the present invention, by controlling the particle diameter distribution, average particle diameter, and circularity of a diene-based rubber polymer having a predetermined microstructure, the swelling degree of a graft copolymer including the diene-based rubber polymer may be controlled. In addition, the present invention may provide a thermoplastic resin composition having excellent physical property balance between impact resistance and fluidity and being capable of providing high gloss or high fluidity.

[FIG. 1]

**Description**

Technical Field

[Cross-Reference to Related Applications]

This application claims priority to Korean Patent Application No. 10-2023-0151820, Korean Patent Application No. 10-2023-0151821, Korean Patent Application No. 10-2023-0151817, and Korean Patent Application No. 10-2023-0151816, filed on November 06, 2023, and Korean Patent Application No. 10-2024-0155234, Korean Patent Application No. 10-2024-0155370, Korean Patent Application No.10-2024-0155371, and Korean Patent Application No. 10-2024-0155233, re-filed on November 05, 2024, based on the priority of the above patents, respectively, in the Korean Intellectual Property Office, the disclosures of each of which are incorporated herein by reference.

The present invention relates to a diene-based rubber polymer and a graft copolymer and thermoplastic resin composition including the same. According to the present invention, by controlling the particle diameter distribution, average particle diameter, and circularity of a diene-based rubber polymer having a predetermined microstructure, the swelling degree of a graft copolymer including the diene-based rubber polymer may be controlled. In addition, the present invention may provide a thermoplastic resin composition having excellent physical property balance between impact resistance and fluidity and being capable of providing high gloss or high fluidity.

[Background Art]

A vinyl cyanide compound-conjugated diene rubber-aromatic vinyl compound graft copolymer, represented by an acrylonitrile-butadiene rubber-styrene resin, has excellent rigidity and chemical resistance by containing acrylonitrile and excellent physical property balance between processability, mechanical strength, and colorability by containing butadiene and styrene. In addition, the graft copolymer has an attractive appearance. Due to these advantages, the graft copolymer is used in various fields such as electrical/electronic products, toy products, and office equipment.

In the vinyl cyanide compound-conjugated diene rubber-aromatic vinyl compound graft copolymer, As the particle size of the conjugated diene rubber increases, the low gloss properties of the graft copolymer increase, so the polymerized conjugated diene rubber is subjected to coagulation treatment using an acid thickening agent. In this case, there are disadvantages such as failure to maintain total solids after coagulation or the generation of a large amount of by-product coagulants, which reduces impact resistance and fluidity.

Since the diene-based rubber polymer is prepared using a radical initiator, it is difficult to artificially control microstructures and cross-linking structures within the diene-based rubber polymer. For example, the microstructures may include a 1,4-cis bond, a 1,4-trans bond, and a 1,2-vinyl bond.

When the diene-based rubber polymer contains uncontrolled microstructures and cross-linking structures, the impact resistance and processability of a graft copolymer and thermoplastic resin composition containing the diene-based rubber polymer deteriorate.

Therefore, there is a need to develop a diene-based rubber polymer and graft copolymer that can solve these problems and provide a physical property balance between impact resistance and fluidity and high gloss.

[Patent Documents]

Japanese Patent Application Publication No. hei 11-130825

[Disclosure]

[Technical Problem]

Therefore, the present invention has been made in view of the above problems, and it is one object of the present invention to provide a diene-based rubber polymer having excellent physical property balance between impact resistance and fluidity by controlling the microstructure, particle diameter distribution, average particle diameter, and circularity thereof and being capable of providing high gloss or high fluidity, a graft copolymer including the diene-based rubber polymer, and a thermoplastic resin composition including the graft copolymer.

The above and other objects can be accomplished by the present invention described below.

[Technical Solution]

I) In accordance with one aspect of the present invention, provided is a diene-based rubber polymer including a microstructure containing 20 to 30 % of a cis-1,4-bond, 55 to 65 % of a trans-1,4-bond, and a remaining amount of a 1,2-bond,

having a first particle diameter distribution section of 200 Å to 3,000 Å,
having an average particle diameter of 3,000 to 4,000 Å or 800 to 1,800 Å,
and having a circularity of 1.03 to 1.5 as calculated by Equation 1 below.

[Equation 1]

$$\text{Circularity} = \frac{1}{50} \sum_{i=1}^{50} D_i \quad,$$

wherein Di is a ratio [Major axis length/Minor axis length] of a length of a major axis to a length of a minor axis in an i-th particle in latex.

II) According to I), the diene-based rubber polymer may have a second particle diameter distribution section of 1,800 Å to 8,000 Å.

III) According to I) to II), a weight ratio (first:second) of particles contained in the first particle diameter distribution section to particles contained in the second particle diameter distribution section may be 1:0.60 to 1:0.94.

IV) According to I) to III), in an entire particle diameter distribution section exhibited by the diene-based rubber polymer, the first particle diameter distribution section may exhibit a polydisperse particle diameter distribution of 15 to 75 %, and the second particle diameter distribution section may exhibit a polydisperse particle diameter distribution of 25 to 55 %.

V) According to I) to IV), the polydisperse particle diameter distribution may be a measurement value of a diene-based rubber polymer in a latex form or a measurement value of an acid-thickening treatment product thereof.

VI) According to I) to V), in the diene-based rubber polymer, the first particle diameter distribution section may have a first particle diameter distribution section of 200 Å to 1,800 Å and a second particle diameter distribution section of 1,800 Å to 8,000 Å, the first particle diameter distribution section may be within a range of 45 to 75 %, the second particle diameter distribution section may be within a range of 25 to 55 %, and an average particle diameter may be within a range of 3,000 to 4,000 Å.

VII) According to I) to VI), in the diene-based rubber polymer, the first particle diameter distribution section may have a first particle diameter distribution section of 1,500 Å to 3,000 Å and a second particle diameter distribution section of 3,000 Å to 8,000 Å, the first particle diameter distribution section may be within a range of 15 to 40 %, the second particle diameter distribution section may be within a range of 60 to 85 %, and an average particle diameter may be within a range of 3,000 to 4,000 Å.

VIII) According to I) to VII), in the diene-based rubber polymer, the first particle diameter distribution section may have a first particle diameter distribution section of 1,500 Å to 3,000 Å and a second particle diameter distribution section of 3,000 Å to 8,000 Å, the first particle diameter distribution section may be within a range of 35 to 65 %, the second particle diameter distribution section may be within a range of 35 to 65 %, and an average particle diameter may be within a range of 3,000 to 4,000 Å.

IX) According to I) to VIII), in the diene-based rubber polymer, the first particle diameter distribution section may have a monodisperse particle diameter distribution section of 300 Å to 600 Å, and an average particle diameter may be within a range of 800 to 1,800 Å.

X) In accordance with another aspect of the present invention, provided is a method of preparing a diene-based rubber polymer, the method including preparing a diene-based rubber polymer latex by emulsion polymerization of a conjugated diene compound; obtaining a diene-based rubber polymer by acid-thickening treatment of the diene-based rubber polymer latex,
wherein the acid-thickening treatment is performed using one or more acid-thickening treatment agents selected from acetic acid, formic acid, citric acid, phosphoric acid, dihydrophosphoric acid, and hydrophosphoric acid.

XI) In accordance with still another aspect of the present invention, provided is a graft copolymer including the diene-based rubber polymer described above.

XII) According to XI), the diene-based rubber polymer may be included in the graft copolymer in an amount of 3 to 80 % by weight.

XIII) According to XI) to XII), the graft copolymer may have a swelling degree of 8 to 20.

XIV) In accordance with still another aspect of the present invention, provided is a thermoplastic resin composition including the graft copolymer described above.

XV) In accordance with yet another aspect of the present invention, provided is a molded article including the thermoplastic resin composition described above.

[Advantageous Effects]

According to the present invention, the present invention has an effect of providing a diene-based rubber polymer having excellent physical property balance between impact resistance and fluidity by controlling the microstructure, particle diameter distribution, and circularity thereof and being capable of providing high gloss or high fluidity, a graft copolymer and thermoplastic resin composition including the diene-based rubber polymer.

[Description of Drawings]

FIG. 1 is a drawing showing the particle diameter distribution after acid-thickening treatment of a diene-based rubber polymer according to Example 1.

FIG. 2 is a drawing showing the particle diameter distribution after acid-thickening treatment of a diene-based rubber polymer according to Example 2.

FIG. 3 is a drawing showing the particle diameter distribution after acid-thickening treatment of a diene-based rubber polymer according to Example 3

FIG. 4 is a drawing showing the particle diameter distribution of a diene-based rubber polymer according to Example 4.

[Best Mode]

Hereinafter, the present invention is described in more detail to help understand the present invention. However, the present invention is not limited to the embodiments below.

In the present disclosure, the "diene-based rubber polymer" may preferably be a polymer obtained by acid thickening of a diene-based rubber polymer latex.

In the present disclosure, the "diene-based rubber polymer latex" may refer to a form dispersed in water as a polymerized colloidal product including a conjugated diene compound.

In the present disclosure, the "capillary hydrodynamic fractionation (CHDF) particle diameter distribution" may be a weight average particle diameter distribution analyzed using CHDF 4000 instrument (Mass Applied Science).

The weight average particle diameter distribution refers to the difference between particle diameters that correspond to half the maximum particle diameter in a particle diameter distribution. As the difference, i.e., the half-width at the particle diameter, increases, the uniformity of the rubber particle size increases. As a specific example, when fmax is the maximum particle diameter, half of the maximum particle diameter is fmax/2, and the range of particle diameters at the corresponding two points is the weight average particle diameter distribution.

In the present disclosure, "polydisperse" refers to having a configuration of a particle diameter distribution having a bimodal, trimodal, or multimodal form within a diene-based rubber polymer latex, and "monodisperse" refers to having a configuration of a particle diameter distribution having a monomodal form within a diene-based rubber polymer latex.

For reference, when a polydisperse diene-based rubber polymer is included, the size of the diene-based rubber polymer latex particles is widely distributed from small to large diameters, which may affect the physical properties of a graft copolymer.

In addition, when a monodisperse diene-based rubber polymer is included, the particle distribution of a diene-based rubber polymer latex may be uniform, and since only small diameters or only large diameters exist, a relatively narrow particle diameter distribution is formed, which may affect the physical properties of a graft copolymer.

For example, the impact strength and gloss of a thermoplastic resin composition including the graft copolymer may be directly affected, and the melting index and swelling degree of the graft copolymer may be indirectly affected.

The present inventors confirmed that, before preparing a graft copolymer, when the microstructure, polydisperse particle diameter distribution, and circularity of a diene-based rubber polymer were controlled within a certain range, the physical property balance between impact resistance and fluidity was excellent, and high gloss and high fluidity could be provided. Based on these results, the present inventors conducted further studies to complete the present invention.

The diene-based rubber polymer of the present invention is a diene-based rubber polymer including 20 to 30 % of a cis-1,4-bond, 55 to 65 % of a trans-1,4-bond, and a remaining amount of a 1,2-bond, has a first particle diameter distribution section of 200 Å to 3,000 Å when subjected to capillary hydrodynamic fractionation, and satisfies circularity in a predetermined range. In this case, the physical property balance between impact resistance and fluidity may be excellent. In addition, high gloss or high fluidity may be provided, and accordingly, the polymer may be usefully used in products requiring impact resistance, products requiring high gloss, or products requiring high fluidity.

Hereinafter, the diene-based rubber polymer is described in detail.

Diene-based rubber polymer

The diene-based rubber polymer of the present invention may include 20 to 30 % of a cis-1,4-bond, 55 to 65 % of a trans-1,4-bond, and a remaining amount of a 1,2-bond.

For example, the diene-based rubber polymer may include one or more selected from the group consisting of polybutadiene rubber, styrene-butadiene rubber, a styrene-butadiene-styrene block copolymer, a styrene-(ethylene-butadiene)-styrene block copolymer, acrylonitrile-butadiene rubber, acrylonitrile-styrene-butadiene rubber, and methyl methacrylate-butadiene rubber, preferably polybutadiene rubber, styrene-butadiene rubber, or acrylonitrile-butadiene rubber, more preferably polybutadiene rubber.

The diene-based rubber polymer may preferably be obtained by emulsion polymerization of a conjugated diene compound followed by acid thickening.

In the present disclosure, for example, the conjugated diene compound may include one or more selected from the group consisting of 1,3-butadiene, 2,3-dimethyl-1,3-butadiene, 2-ethyl-1,3-butadiene, 1,3-pentadiene, and isoprene, preferably 1,3-butadiene.

In the present disclosure, the cis-1,4-bond, trans-1,4-bond, and 1,2-bond may be collectively called microstructures.

The microstructure represents the result of analysis by 13C 1D Normal NMR, and for example, the microstructure may be a value measured at the pre-crosslinking step.

The microstructure may also be measured using IR, but since overlapping parts may occur, it is more preferable to measure the microstructure using NMR in terms of precision.

For example, the microstructure may have 20 to 27 % of a cis-1,4-bond, 57 to 63 % of a trans-1,4-bond, and a remaining amount of a 1,2-bond. In this case, the physical property balance between impact resistance and fluidity and high gloss may be imparted to a thermoplastic resin composition including a graft copolymer including the diene-based rubber polymer.

As a specific example, the microstructure may have 20 to 25 % of a cis-1,4-bond, 57 to 62 % of a trans-1,4-bond, and 15 to 20 % by weight of a 1,2-vinyl bond, as a preferred example, 22 to 24.5 % by weight of a cis-1,4-bond, 59 to 61 % by weight of a trans-1,4-bond, and 15 to 18 % by weight of a 1,2-vinyl bond.

The diene-based rubber polymer may have a particle diameter distribution measured by capillary hydrodynamic fractionation (CHDF) (hereinafter referred to as 'CHDF particle diameter distribution') that exhibits not only a monodisperse particle diameter distribution but also a polydisperse particle diameter distribution that exhibits multiple particle diameter distribution ranges.

In the present disclosure, a polydisperse particle diameter distribution means that the above-mentioned distribution section includes one peak. Here, the particle diameter distribution section means a range in which the diene-based rubber polymer is distributed according to particle size, and the polydisperse particle diameter distribution means that the above-mentioned distribution section includes two or more peaks.

For reference, when the polydisperse diene-based rubber polymer is included, the size of the diene-based rubber polymer latex particles is widely distributed from small to large diameters, which may affect the physical properties of the graft copolymer. When the monodisperse diene-based rubber polymer is included, the particle distribution of the diene-based rubber polymer latex may be uniform, and since only small diameters or only large diameters exist, a relatively narrow particle diameter distribution is formed, which may affect the physical properties of the graft copolymer.

For example, the polydisperse particle diameter distribution may include one or more peaks in a first particle diameter distribution section of 200 Å to 1,800 Å and a second particle diameter distribution section of 1,800 Å to 8,000 Å, respectively. In the case of the particle diameter distribution of the conventional diene-based rubber polymer, the particle diameter distribution section was narrow, and a graft copolymer with poor fluidity is provided. On the other hand, according to the present invention, since the particle diameter distribution section is wide and a polydisperse particle diameter distribution appears, the problem of poor fluidity may be solved and the productivity of the graft copolymer may be improved.

As a specific example, the polydisperse particle diameter distribution may exhibit a first particle diameter distribution section of 200 Å to 1,500 Å and a second particle diameter distribution section of 1,800 Å to 8,000 Å. Within this range, fluidity may be improved.

For example, the weight ratio (first:second) of particles contained in the first particle diameter distribution section to particles contained in the second particle diameter distribution section may be 1:0.60 to 1:0.90. In this case, fluidity may be improved.

As a preferred example, the weight ratio (first:second) of particles contained in the first particle diameter distribution section to particles contained in the second particle diameter distribution section may be 1:0.65 to 1:0.85. In this case, fluidity may be improved.

As a most preferred example, the weight ratio (first:second) of particles contained in the first particle diameter distribution section to particles contained in the second particle diameter distribution section may be 1:0.69 to 1:0.82. In this case, fluidity may be improved.

For example, in the entire particle diameter distribution section exhibited by the diene-based rubber polymer, the first particle diameter distribution section may be included within 45 to 75 % by weight, 45 to 65 % by weight, preferably 50 to 65 % by weight. Within this range, fluidity may be improved.

For example, in the entire particle diameter distribution section exhibited by the diene-based rubber polymer, the second particle diameter distribution section may be included within 25 to 55 % by weight, 35 to 55 % by weight, preferably 35 to 45 % by weight. Within this range, fluidity may be improved.

For example, the polydisperse particle diameter distribution may include one or more peaks in a first particle diameter distribution section of 1,500 Å to 3,000 Å and a second particle diameter distribution section of 3,000 Å to 8,000 Å. In the case of particle diameter distribution of the conventional diene-based rubber polymer, a graft copolymer with poor fluidity is provided due to the narrow particle diameter distribution section. On the other hand, according to the present invention, since a polydisperse particle diameter distribution appears in addition to a wide particle diameter distribution section, the problem of poor fluidity may be solved and the productivity of a graft copolymer may be improved.

As a specific example, the polydisperse particle diameter distribution may exhibit a first particle diameter distribution section of 1,500 Å to 3,000 Å or 1,800 Å to 3,000 Å and a second particle diameter distribution section of 3,000 Å to 8,000 Å. Within this range, fluidity may be improved.

For example, the weight ratio (first:second) of particles contained in the first particle diameter distribution section to particles contained in the second particle diameter distribution section may be 1:0.60 to 1:0.90. In this case, fluidity may be improved.

As a preferred example, the weight ratio of particles contained in the first particle diameter distribution section to particles contained in the second particle diameter distribution section may be 1:0.65 to 1:0.85. In this case, fluidity may be improved.

As a most preferred example, the weight ratio of particles contained in the first particle diameter distribution section to particles contained in the second particle diameter distribution section may be 1:0.69 to 1:0.82. In this case, fluidity may be improved.

For example, in the entire particle diameter distribution section exhibited by the diene-based rubber polymer, the first particle diameter distribution section may be included within 15 to 40 %, 20.0 to 32.9 % by weight, or 20.0 to 30.0 % by weight, preferably 22.0 to 28.0 % by weight. Within this range, fluidity may be improved.

For example, in the entire particle diameter distribution section exhibited by the diene-based rubber polymer, the second particle diameter distribution section may be included within 60 to 85 % by weight, 67.1 to 80.0 % by weight, or 70.0 to 80.0 % by weight, preferably 72.0 to 78.0 % by weight. Within this range, fluidity may be improved.

For example, the polydisperse particle diameter distribution may include one or more peaks in a first particle diameter distribution section of 1,500 Å to 3,000 Å and a second particle diameter distribution section of 3,000 Å to 8,000 Å. In the case of particle diameter distribution of the conventional diene-based rubber polymer, a graft copolymer with poor fluidity is provided due to the narrow particle diameter distribution section. On the other hand, according to the present invention, since a polydisperse particle diameter distribution appears in addition to a wide particle diameter distribution section, the problem of poor fluidity may be solved and the productivity of a graft copolymer may be improved.

As a specific example, the polydisperse particle diameter distribution may exhibit a first particle diameter distribution section of 1,500 Å to 3,000 Å or 1,800 Å to 3,000 Å and a second particle diameter distribution section of 3,000 Å to 8,000 Å. Within this range, fluidity may be improved.

For example, the weight ratio (first:second) of particles contained in the first particle diameter distribution section to particles contained in the second particle diameter distribution section may be 1:0.84 to 1:0.94. In this case, fluidity may be improved.

As a preferred example, the weight ratio (first:second) of particles contained in the first particle diameter distribution section to particles contained in the second particle diameter distribution section may be 1:0.91 to 1:0.93. In this case, fluidity may be improved.

As a more preferred example, the weight ratio (first:second) of particles contained in the first particle diameter distribution section to particles contained in the second particle diameter distribution section may be 1:0.92 to 1:0.93. In this case, fluidity may be improved.

For example, in the entire particle diameter distribution section exhibited by the diene-based rubber polymer, the first particle diameter distribution section may be included within 35 to 65 %, as a preferred example, 45 to 65 %, as a more preferred example, 45 to 55 %. Within this range, fluidity may be improved.

For example, in the entire particle diameter distribution section exhibited by the diene-based rubber polymer, the second particle diameter distribution section may be included within 35 to 65 %, as a preferred example, 45 to 65 %, as a more preferred example, 45 to 55 %. Within this range, fluidity may be improved.

As a specific example, the monodisperse particle diameter distribution may exhibit a particle diameter distribution section of 350 Å to 550 Å. Within this range, fluidity may be improved.

The particle diameter distribution is based on weight ratio unless otherwise specified.

The diene-based rubber polymer may have a circularity of 1.03 to 1.5, preferably 1.05 to 1.08 as calculated by Equation 1 below. In this case, uniform spherical particles may be provided.

$$[\text{Equation 1}]$$

$$\text{Circularity} = \frac{1}{50} \sum_{i=1}^{50} D_i$$

In Equation 1, Di is the ratio [Major axis length/Minor axis length] of the length of a major axis to the length of a minor axis in an i-th particle in latex.

The circularity is an indicator of the degree of sphericity of the shape of particles in latex and may also be called spheroidicity. For 50 particles in latex, the length of the major axis passing through the center of the particle and the length of the minor axis passing through the center of the particle and perpendicular to the major axis were measured. The ratio of the length of the major axis to the length of the minor axis in each particle (length of major axis/length of minor axis) is calculated. The circularity is defined as the average ratio of the length of the major axis to the length of the minor axis of each particle. As the above value approaches 1, the length of the major axis and the length of the minor axis of each particle become closer, which may mean that the particles making up the latex are closer to a sphere.

The diene-based rubber polymer may have an average particle diameter of 3,000 to 4,000 Å or 800 to 1,800 Å. In this case, impact resistance may be improved.

For example, the diene-based rubber polymer may have an average particle diameter of preferably 3,000 to 3,700 Å, more preferably 3,200 to 3,600 Å.

As another example, the diene-based rubber polymer may have an average particle diameter of preferably 952 to 1,510 Å, more preferably 1,000 to 1,400 Å.

In the present disclosure, the average particle diameter may be measured by dynamic light scattering, and specifically, may be measured as an intensity value using a Nicomp 380 particle size analyzer (manufacturer: PSS) in a Gaussian mode. As a specific measurement example, a sample is prepared by diluting 0.1 g of latex (TSC: 35 to 50 wt%) 1,000 to 5,000-fold with distilled water, i.e., a sample is diluted appropriately so as not to deviate significantly from an intensity setpoint of 300 kHz, and is placed in a glass tube. Then, the average particle diameter of the sample is measured using a flow cell in auto-dilution in a measurement mode of dynamic light scattering/intensity 300 kHz/intensity-weight Gaussian analysis. At this time, setting values are as follows: temperature: 23 °C; measurement wavelength: 632.8 nm; and channel width: 10 sec.

Methods for controlling the microstructure and swelling degree of the diene-based rubber polymer include changing the type and content of a polymerization initiator, using a radical catalyst or alkali metal catalyst, changing polymerization temperature, and/or changing the type and content of a chain transfer agent. Among these factors, the influence of polymerization temperature is significant, so the ratio of cis-1,4-bond varies greatly depending on the polymerization temperature, and the swelling degree varies greatly depending on the ratio of cis-1,4-bond.

For example, the swelling degree may be measured in the following way.

First, diene-based rubber polymer latex is dropped into a mixture containing an aqueous ethanol solution of a 1:1 volume ratio and 1% by weight of sulfuric acid to obtain solids, which is then completely dried. About 1 g of the obtained solids is immersed in 100 ml of toluene at room temperature for 24 hours in a dark room, and then filtered through a 100 mesh wire mesh to obtain a toluene-insoluble content. After the toluene-insoluble material is completely dried, the swelling degree is calculated by dividing the weight before complete drying by the weight after complete drying.

In the present disclosure, complete dryness means the weight when there is no further weight change under vacuum drying conditions.

For example, the swelling degree may be 4 to 12, preferably 5.8 to 10.1, more preferably 6 to 9. Within this range, impact resistance may be improved.

As another example, in the diene-based rubber polymer, the first particle diameter distribution section may have a first particle diameter distribution section of 200 Å to 1,800 Å and a second particle diameter distribution section of 1,800 Å to 8,000 Å, the first particle diameter distribution section may be within a range of 45 to 75 %, the second particle diameter distribution section may be within a range of 25 to 55 %, and an average particle diameter may be within a range of 3,000 to 4,000 Å. In this case, the swelling degree of a graft copolymer including the diene-based rubber polymer may be controlled, and thus a thermoplastic resin composition including the graft copolymer may have excellent physical property balance between impact resistance and fluidity.

As another example, the diene-based rubber polymer may be a rubber latex in which a particle diameter distribution measured by capillary hydrodynamic fractionation (CHDF) (hereinafter referred to as 'CHDF particle diameter distribution') is a polydisperse particle diameter distribution.

For example, the CHDF polydisperse particle diameter distribution may exhibit a first particle diameter distribution section of 1,500 Å to 3,000 Å and a second particle diameter distribution section of 3,000 Å to 8,000 Å. In this case, the problem of providing graft copolymers with poor processability in the past may be solved. In addition, the productivity of a graft copolymer may be secured.

As another example, the diene-based rubber polymer may be a diene-based rubber polymer including 20 to 30 % of a cis-1,4-bond, 55 to 65 % of a trans-1,4-bond, and a remaining amount of a 1,2-bond, and may have a polydisperse particle diameter distribution including one or more peaks in a first particle diameter distribution section of 1,500 Å to 3,000 Å and a second particle diameter distribution section of 3,000 Å to 8,000 Å, respectively, when subjected to capillary hydrodynamic fractionation.

In an entire particle diameter distribution section exhibited by the diene-based rubber polymer, the first particle diameter distribution section may occupy 15 to 40 %, and the second particle diameter distribution section may occupy 60 to 85 %. In this case, the swelling degree of a graft copolymer including the diene-based rubber polymer may be controlled, and thus a thermoplastic resin composition including the graft copolymer may have excellent physical property balance between impact resistance and fluidity.

The diene-based rubber polymer may be a rubber latex in which a particle diameter distribution measured by capillary hydrodynamic fractionation (CHDF) (hereinafter referred to as 'CHDF particle diameter distribution') is a polydisperse particle diameter distribution.

For example, the CHDF polydisperse particle diameter distribution may exhibit a first particle diameter distribution section of 1,500 Å to 3,000 Å and a second particle diameter distribution section of 3,000 Å to 8,000 Å. In this case, the problem of providing graft copolymers with poor processability in the past may be solved, In addition, the productivity of a graft copolymer may be secured.

As another example, the diene-based rubber polymer may be a diene-based rubber polymer including 20 to 30 % of a cis-1,4-bond, 55 to 65 % of a trans-1,4-bond, and a remaining amount of a 1,2-bond, and may have a polydisperse particle diameter distribution including one or more peaks in a first particle diameter distribution section of 1,500 Å to 3,000 Å and a second particle diameter distribution section of 3,000 Å to 8,000 Å, respectively, when subjected to capillary hydrodynamic fractionation. In an entire particle diameter distribution section exhibited by the diene-based rubber polymer, the first particle diameter distribution section may occupy 35 to 65 %, and the second particle diameter distribution section may occupy 35 to 65 %. In this case, the swelling degree of a graft copolymer including the diene-based rubber polymer may be controlled, and thus a thermoplastic resin composition including the graft copolymer may have excellent physical property balance between impact resistance and fluidity.

As another example, the diene-based rubber polymer may be a diene-based rubber polymer including 20 to 30 % of a cis-1,4-bond, 55 to 65 % of a trans-1,4-bond, and a remaining amount of a 1,2-bond, may have a monodisperse particle diameter distribution of 300 Å to 600 Å when subjected to capillary hydrodynamic fractionation, and may have a swelling degree of 4 to 12. In this case, a thermoplastic resin composition including the diene-based rubber polymer may have excellent physical property balance between impact resistance and fluidity.

The diene-based rubber polymer may include a linear structure appearing in the pre-crosslinking step.

For example, the diene-based rubber polymer may be prepared by various methods, and may be prepared by the following method.

Method of preparing diene-based rubber polymer

For example, the diene-based rubber polymer according to the present invention may be obtained by emulsion-polymerizing a conjugated diene compound to prepare a diene-based rubber polymer latex and performing acid-thickening treatment of the diene-based rubber polymer latex.

For example, the diene-based rubber polymer latex may be prepared by including a first step of polymerizing 20 to 40 parts by weight of a conjugated diene compound based on 100 parts by weight in total of the conjugated diene compound, 0.1 to 2 parts by weight of an emulsifier, a molecular weight modifier, and an electrolyte; and a second step of adding the residual conjugated diene compound and a molecular weight modifier and performing polymerization to obtain a diene-based rubber polymer latex.

For example, the emulsifier may be a polymer of an unsaturated fatty acid or a metal salt thereof. In this case, latex stability may be excellent.

For example, based on 100 parts by weight of the conjugated diene compound, the emulsifier may be included in an amount of 0.3 to 1.7 parts by weight, preferably 0.5 to 1.5 parts by weight, more preferably 0.13 to 0.2 parts by weight.

Within this range, impact resistance may be excellent, productivity may be increased during injection molding, and appearance quality may be improved.

For example, the molecular weight modifier may be a mercaptan molecular weight modifier, preferably t-dodecyl mercaptan.

For example, based on 100 parts by weight of the conjugated diene compound, the molecular weight modifier may be included in an amount of 0.05 to 0.3 parts by weight, preferably 0.1 to 0.25 parts by weight, more preferably 0.13 to 0.2 parts by weight. Within this range, impact resistance may be improved.

For example, in the first step, the polymerization reaction may be performed at 50 to 60 °C for 50 to 70 minutes, preferably at 53 to 57 °C for 55 to 65 minutes. In this case, the half-width of the particle size of the diene-based rubber polymer may be controlled to significantly increase impact resistance and improve fluidity.

For example, in the first step, the polymerization may be performed by including 0.01 to 0.5 parts by weight of an oxidation-reduction catalyst, 0.01 to 0.7 parts by weight of a fat-soluble polymerization initiator, and 80 to 120 parts by weight of ion-exchange water, preferably 0.05 to 0.3 parts by weight of an oxidation-reduction catalyst, 0.1 to 0.5 parts by weight of a fat-soluble polymerization initiator, and 90 to 110 parts by weight of ion-exchange water. Within this range, since unreacted monomers are reduced, productivity may be increased, and the physical properties of a graft copolymer including the polymer may be improved.

For example, the oxidation-reduction catalyst may include one or more selected from sodium formaldehyde sulfoxylate, sodium ethylenediamine tetraacetate, ferrous sulfate, dextrose, sodium pyrrole phosphate, and sodium sulfite. Within this range, by reducing unreacted monomers, the productivity and physical properties of the graft copolymer may be improved.

For example, the fat-soluble polymerization initiator may include one or more selected from alkyl peroxide, aryl peroxide, and azonitrile, specifically one or more selected from cumene hydroperoxide, diisopropyl benzene hydroperoxide, azobis isobutyronitrile, t-butyl hydroperoxide, paramethane hydroperoxide, and benzoylperoxide, preferably t-butyl hydroperoxide.

For example, the electrolyte may include one or more selected from $K_2CO_3$, $Na_2SO_4$, $Na_3PO_4$, $NaH_2PO_4$, and $Na_2HPO_4$, preferably $K_2CO_3$.

For example, based on 100 parts by weight of the conjugated diene compound, the electrolyte may be included in an amount of 0.1 to 0.5 parts by weight, preferably 0.2 to 0.4 parts by weight. Within this range, impact resistance may be excellent, productivity may be increased during injection molding, and appearance quality may be improved.

For example, after the first step, in the second step, preferably, the temperature may be increased to 73 to 83 °C while continuously adding the residual conjugated diene compound and the molecular weight modifier for 9 to 11 hours and the temperature may be maintained for 8 to 10 hours. More preferably, the temperature may be increased to 75 to 80 °C while continuously adding the residual conjugated diene compound and the molecular weight modifier for 9.5 to 10.5 hours and the temperature may be maintained for 8.5 to 9.5 hours. In this case, since the half-maximum width of the particle diameter of the conjugated diene rubber increases, the impact resistance may be increased and the fluidity may be excellent.

In the present disclosure, "continuous feed" means that components are not fed batchwise.

For example, according to continuous feed, components may be fed for 10 minutes or more, 30 minutes or more, 1 hour or more, preferably 2 hours or more, for example, 12 hours or less, 11 hours or less, 10 hours or less within a polymerization time range in drop by drop, step by step, or continuous flow.

The second step may preferably include step 2-1) of continuously adding the residual conjugated diene compound and the molecular weight modifier for 9 to 11 hours, increasing temperature to 73 to 83 °C for 8 to 10 hours, and performing a polymerization reaction while maintaining the temperature; step 2-2) of adding 0.05 to 0.2 parts by weight of a water-soluble initiator and 0.05 to 0.3 parts by weight of an emulsifier at a polymerization conversion rate of 30 to 40 % by weight and performing a polymerization reaction; and step 2-3) of terminating the polymerization reaction at a polymerization conversion rate of 98 to 209 % by weight.

In the present disclosure, the polymerization conversion rate may be defined as the weight (wt%) of monomers converted to a polymer based on 100 % of the total weight of the monomers introduced until the end of polymerization. A method of measuring polymerization conversion rate performed according to these definitions may be used in the present invention without any special limitations. As a specific example, 1.5 g of a prepared latex is dried in a 150 °C hot air dryer for 15 minutes, the weight thereof is measured, total solids content (TSC) is calculated by Equation 2 below, and the polymerization conversion rate is calculated using the total solids content by Equation 3 below.

Equation 3 is based on the assumption that the total weight of the introduced monomers is 100 parts by weight.

Total solids content (%) = [Weight after drying / Weight before drying] $\times$ 100     [Equation 2]

  Polymerization conversion rate (%) = [Total solids content $\times$ (Total weight of a monomer, ion-exchange water, and auxiliary materials added) / 100]- (Weight of the auxiliary materials added other than the monomer and ion-exchange water)     [Equation 3]

In Equation 3, the auxiliary materials include an initiator, an emulsifier, an electrolyte, and a molecular weight modifier.

The introduced monomer refers to a conjugated diene compound.

For example, in step 2-2), as the water-soluble initiator, one or more selected from hydrogen peroxide, potassium persulfate, sodium persulfate, and ammonium persulfate may be used.

For example, based on 100 parts by weight of the conjugated diene compound, the water-soluble initiator may be included in an amount of 0.07 to 0.15 parts by weight, preferably 0.09 to 0.13 parts by weight. Within this range, by reducing unreacted monomers, productivity may be increased and physical properties may be improved.

For example, in step 2-2), the emulsifier may be selected from the emulsifiers described in step 1).

For example, based on 100 parts by weight of the conjugated diene compound, the emulsifier of step 2-2) may be included in an amount of 0.1 to 0.25 parts by weight, preferably 0.1 to 0.2 parts by weight. Within this range, by reducing the gel content, impact resistance may be improved and residues may be reduced during injection molding.

For example, the diene-based rubber polymer latex obtained in step 2-3) may have an average particle diameter of 3,000 to 4,000 Å, preferably 3,000 to 3,600 Å, more preferably 3,200 to 3,700 Å. Within this range, since the effective area of the rubber increases, impact resistance may be significantly increased, and physical properties such as fluidity may be excellent.

For example, the diene-based rubber polymer latex obtained in step 2-3) may have an average particle diameter of 800 to 1,800 Å, preferably 952 to 1,510 Å, more preferably 1,000 to 1,400 Å. Within this range, as the half-width of particle diameter increases, impact resistance may be significantly increased, and physical properties such as fluidity may be excellent.

The diene-based rubber polymer latex may have a polydisperse particle diameter distribution.

According to the polymerization method according to the present invention, the particle diameter distribution is selectively widened, so that the balance between processability and physical properties may be easily controlled. However, due to the narrow polydisperse particle diameter distribution, although the tensile and viscoelastic properties are excellent, the processability may be poor and the productivity may be reduced.

The diene-based rubber polymer latex may preferably be a latex that has been subjected to acid-thickening treatment.

The acid may be acids typically used in the thickening treatment of diene-based rubber polymers, and may preferably include one or more selected from acetic acid, formic acid, citric acid, phosphoric acid, dihydrophosphoric acid, and hydrophosphoric acid.

Based on 100 parts by weight (based on solids) of the diene-based rubber polymer latex, the acid may be included in an amount of 0.1 to 10 parts by weight or 0.5 to 5 parts by weight.

In addition, the diene-based rubber polymer latex obtained in step 2-3) may have an average particle diameter of 800 to 1,800 Å, preferably 952 to 1,510 Å, more preferably 1,000 to 1,400 Å. Within this range, since the half-width of particle diameter increases, impact resistance may be significantly increased, the balance between impact resistance and fluidity may be excellent, and high gloss may be provided.

Graft copolymer

The graft copolymer includes the diene-based rubber polymer described above. In this case, the swelling degree of the graft copolymer may be also controlled, and thus the graft copolymer and a thermoplastic resin composition including the graft copolymer may have excellent physical property balance between impact resistance and fluidity and excellent high gloss.

For example, the graft copolymer may be a graft copolymer obtained by graft-polymerizing 5 to 80 parts by weight of the above-described diene-based rubber polymer and 20 to 95 parts by weight of one or more selected from an aromatic vinyl compound and a vinyl cyanide compound.

In the present disclosure, for example, the aromatic vinyl compound may include one or more selected from the group consisting of styrene, $\alpha$-methyl styrene, o-methyl styrene, p-methyl styrene, m-methyl styrene, ethyl styrene, isobutyl styrene, t-butyl styrene, o-bromostyrene, p-chlorostyrene, m-bromostyrene, o-chlorostyrene, p-chlorostyrene, m-chlorostyrene, vinyltoluene, vinylxylene, fluorostyrene, and vinylnaphthalene, preferably one or more selected from the group consisting of styrene and $\alpha$-methyl styrene, more preferably styrene. In this case, due to appropriate fluidity, processability and mechanical properties such as impact resistance may be excellent.

In the present disclosure, for example, the vinyl cyanide compound may include one or more selected from the group consisting of acrylonitrile, methacrylonitrile, ethylacrylonitrile, and isopropylacrylonitrile, preferably acrylonitrile.

In addition, the graft copolymer may further include a comonomer copolymerizable with an aromatic vinyl compound and a vinyl cyanide compound.

For example, the comonomer may include one or more selected from a (meth)acrylic acid ester monomer, a maleimide monomer, and an amide monomer.

For example, the (meth)acrylic acid ester monomer may include one or more selected from the group consisting of methyl (meth)acrylate, ethyl (meth)acrylate, propyl (meth)acrylate, butyl (meth)acrylate, 2-ethylhexyl acrylate, phenyl (meth)acrylate, 4-t-butylphenyl (meth)acrylate, (di)bromophenyl (meth)acrylate, and chlorophenyl (meth)acrylate.

For example, the maleimide monomer may be N-phenylmaleimide, N-cyclohexylmaleimide, or a mixture thereof.

For example, the amide monomer may be acrylamide, methacrylamide, or a mixture thereof.

The composition ratio of the aromatic vinyl compound, the vinyl cyanide compound, and the comonomer is not particularly limited, and for example, may be 60 to 90 % by weight of the aromatic vinyl compound, 10 to 40 % by weight of the vinyl cyanide compound, and 0 to 30 % by weight of the copolymerizable comonomer. Within this range, swelling degree may be easily controlled.

As another example, the composition ratio may preferably be 20 to 70 % by weight of the aromatic vinyl compound, 10 to 60 % by weight of the vinyl cyanide compound, and 0 to 30 % by weight of the copolymerizable comonomer.

For example, the ratio of the diene-based rubber polymer latex (based on solids) and other compounds (including comonomer) may be 5 to 80 % by weight of the diene-based rubber polymer latex and 20 to 95 % by weight of other compounds, preferably 30 to 70 % by weight of the diene-based rubber polymer latex and 30 to 70 % by weight of other compounds. Within this range, physical property balance may be excellent.

There is no particular limitation on the grafting degree of the graft copolymer, but when the grafting degree is too low, the impact resistance tends to decrease, and when the grafting degree is too high, the fluidity tends to decrease. Therefore, the grafting degree is preferably 25 to 85 % by weight, more preferably 30 to 60 % by weight.

Here, when measuring the grafting degree, acetone is used as a solvent to separate the graft copolymer into soluble matter and insoluble matter, and the grafting degree may be calculated using Equation 4 below.

$$\text{Grafting degree (wt\%)} = [(\text{Weight of acetone-insoluble matter} - \text{Weight of rubber polymer in graft copolymer})/\text{Weight of rubber polymer in graft copolymer}] \times 100 \qquad \text{[Equation 4]}$$

As another example, the graft copolymer may be a graft copolymer by graft-polymerizing 5 to 80 % by weight (based on solids) of the diene-based rubber polymer described above, 10 to 75 % by weight of an aromatic vinyl compound, and 5 to 25 % by weight of a vinyl cyanide compound.

The swelling degree of the graft copolymer may be measured in the following manner.

First, the graft copolymer is immersed in acetone to extract insoluble matter and then completely dried. The obtained completely dried material is immersed in a toluene solvent in a dark room at room temperature for 48 hours and filtered to obtain toluene-insoluble matter. The obtained toluene-insoluble matter is completely dried, and the swelling degree is calculated by dividing the weight before complete drying by the weight after complete drying.

For example, the swelling degree may be 8 to 20, preferably 10 to 18. Within this range, impact resistance may be improved.

There is no particular limitation on the method for polymerizing the graft copolymer, and emulsion polymerization, suspension polymerization, bulk polymerization, and the like may be used.

The graft copolymer may be used alone, but may also be mixed with other thermoplastic resins as needed. For example, other thermoplastic resins may include a styrene-acrylonitrile resin, an $\alpha$-methylstyrene-acrylonitrile resin, a styrene-acrylonitrile-methyl methacrylate resin, an N-phenylmaleimide-styrene resin, an N-phenylmaleimide-styrene-acrylonitrile resin, a polycarbonate resin, a polybutylene terephthalate resin, a polyethylene terephthalate resin, a polyamide resin, a rubber-reinforced polystyrene resin, an acrylonitrile-butadiene rubber-styrene resin, an acrylonitrile-ethylene·propylene rubber-styrene resin, a methacrylate methyl-butadiene rubber-styrene resin, and/or an acrylonitrile-acryl rubber-styrene resin.

Method of preparing graft copolymer

When the graft copolymer is prepared, 40 to 70 % by weight (based on solids) of a diene-based rubber polymer, 15 to 45 % by weight of an aromatic vinyl compound, and 5 to 25 % by weight of a vinyl cyanide compound may be subjected to a graft polymerization reaction to obtain a vinyl cyanide compound-conjugated diene rubber-aromatic vinyl compound graft copolymer.

According to the method of preparing a graft copolymer, preferably, 45 to 65 % by weight (based on solids) of a diene-based rubber polymer, 20 to 40 % by weight of an aromatic vinyl compound, and 10 to 20 % by weight of a vinyl cyanide compound may be subjected to a graft polymerization reaction to obtain a vinyl cyanide compound-conjugated diene rubber-aromatic vinyl compound graft copolymer. More preferably, 50 to 60 % by weight (based on solids) of a diene-based rubber polymer, 25 to 35 % by weight of an aromatic vinyl compound, and 12 to 17 % by weight of a vinyl cyanide compound may be subjected to a graft polymerization reaction to obtain a vinyl cyanide compound-conjugated diene rubber-aromatic vinyl compound graft copolymer. Within this range, both fluidity and impact resistance may be excellent.

The method of preparing a graft copolymer may preferably include first graft polymerization step a) of performing a reaction while continuously adding, based on 100 parts by weight in total of a diene-based rubber polymer (based on solids), an aromatic vinyl compound, and a vinyl cyanide compound, 40 to 70 parts by weight (based on solids) of the diene-based rubber polymer latex and 80 to 120 parts by weight of ion-exchange water; a mixture solution containing 15 to 45 parts by weight of an aromatic vinyl compound, 5 to 25 parts by weight of a vinyl cyanide compound, 10 to 30 parts by weight of an ion-exchange water, 0.01 to 2 parts by weight of an emulsifier, and 0.01 to 2 parts by weight of a molecular weight modifier; 0.01 to 2 parts by weight of a fat-soluble polymerization initiator; and 0.001 to 0.4 parts by weight of an oxidation-reduction catalyst at 65 to 75 °C for 2 to 4 hours; step b) of adding 0.001 to 0.6 parts by weight of an oxidation-reduction catalyst and 0.001 to 0.5 parts by weight of a fat-soluble polymerization initiator after the first graft polymerization step; second graft polymerization step c) of increasing temperature to 75 to 85 °C after adding the oxidation-reduction catalyst and the fat-soluble polymerization initiator and performing a reaction for 50 to 70 minutes; and step d) of terminating the polymerization reaction at a polymerization conversion rate of 90 to 99 %. In this case, fluidity and impact resistance may be excellent.

For example, the emulsifier may be included in an amount of 0.01 to 2 parts by weight, preferably 0.1 to 1.5 parts by weight, more preferably 0.1 to 1 part by weight, still more preferably 0.2 to 0.7 parts by weight. Within this range, latex stability may be excellent, and coagulants may be reduced.

In step a), the emulsifier may be, for example, a polymer of an unsaturated fatty acid (multimer acid) or a metal salt thereof. In this case, latex stability may be excellent, and coagulants may be reduced.

For example, the unsaturated fatty acid may be a straight, branched, or cyclic unsaturated fatty acid having 8 to 22 carbon atoms. In this case, the coagulants of latex may be reduced, and residues in an injection mold may be reduced during injection molding.

In step a), the molecular weight modifier may be included in an amount of preferably 0.05 to 1.5 parts by weight, more preferably 0.1 to 1 part by weight, still more preferably 0.2 to 0.7 parts by weight.

In step a), the oxidation-reduction catalyst may be included in an amount of preferably 0.001 to 0.3 parts by weight, more preferably 0.005 to 0.1 parts by weight.

In step a), preferably, the reaction may be performed by continuously adding the mixture solution (diene-based rubber polymer) and the fat-soluble polymerization initiator at 67 to 73 °C for 2.5 to 3.5 hours. Within this range, graft efficiency may be excellent, and latex coagulants may be reduced.

In step b), the oxidation-reduction catalyst may be included in an amount of preferably 0.001 to 0.6 parts by weight, more preferably 0.01 to 0.3 parts by weight.

In step b), the molecular weight modifier may be included in an amount of preferably 0.01 to 0.3 parts by weight, more preferably 0.03 to 0.1 parts by weight.

In step c), after adding the oxidation-reduction catalyst and the fat-soluble polymerization initiator, the temperature may be increased to 77 to 82 °C and the reaction may be performed for 55 to 65 minutes. Within this range, reaction efficiency may be excellent, and coagulants may be reduced.

In step d), the polymerization reaction may be preferably terminated at a polymerization conversion rate of 98 to 99 %.

The vinyl cyanide compound-conjugated diene rubber-aromatic vinyl compound graft copolymer obtained in step d) may be subjected to conventional processes including coagulation, washing, and drying to obtain the graft copolymer in powder form.

For example, based on 100 parts by weight (based on solids) of the graft copolymer latex, the coagulation may be performed by adding an acid coagulant in an amount of 0.1 to 2 parts by weight, preferably 0.5 to 1.5 parts by weight.

For example, the acid coagulant may include one or more selected from the group consisting of sulfuric acid, hydrochloric acid, formic acid, and acetic acid, preferably sulfuric acid. In this case, coagulation efficiency may be excellent.

In the present disclosure, when an electrolyte and a coagulant are included in a solvent such as water, the weight thereof means weight excluding the solvent.

Thermoplastic resin composition

In the present disclosure, the thermoplastic resin composition may include the graft copolymer. As a specific example, the thermoplastic resin composition may include the graft copolymer and other thermoplastic resins.

Here, the other thermoplastic resin may be selected from one or more types described as other thermoplastic resins in the graft copolymer described above.

When necessary, the thermoplastic resin composition may include hindered phenol-based, sulfur-containing organic compound-based, and phosphorus-containing organic compound-based antioxidants; phenol-based and acrylate-based heat stabilizers; benzotriazole-based, benzophenone-based, and salicylate-based UV absorbers; lubricants such as higher fatty acid amides; plasticizers such as phosphate esters; halogen compounds such as polybromophenyl ether, tetrabromobisphenol-A, brominated epoxy oligomer, and brominated; phosphorus-based compounds; flame retardants such as antimony trioxide; flame retardant auxiliaries; masking agents; carbon black, titanium oxide; pigments; and/or dyes.

In addition, the thermoplastic resin composition may further include reinforcing agents or fillers, such as talc, calcium carbonate, aluminum hydroxide, glass fiber, glass flakes, glass beads, carbon fiber, and/or metal fiber.

The thermoplastic resin composition may be obtained by mixing the above-mentioned components using a mixing device.

For example, known mixing devices such as an extruder, a roll, a Banbury mixer, and a kneader may be used as the mixing device.

For example, when impact strength is measured using a specimen having a thickness of 1/4" according to ASTM D256, the thermoplastic resin composition may have an impact strength of 20 kgf.cm/cm or more, preferably 20 to 30 kgf.cm/cm, more preferably 23 to 30 kgf.cm/cm. In this case, a molded article having excellent mechanical strength may be provided.

For example, the thermoplastic resin composition may have a melting index of 26 to 35 g/10 min, preferably 29 to 33 g/10 min, more preferably 29 to 33 g/10 min as measured at 220 °C under 10 kg according to ASTM D648. In this case, the physical property balance between impact resistance and fluidity may be excellent, and high gloss or high fluidity may be provided.

For example, the thermoplastic resin composition may have a gloss (45°) of 95 or more, preferably 95 to 99, more preferably 96 to 99 as measured according to ASTM D528. In this case, the physical property balance between impact resistance and fluidity may be excellent, and high gloss or high fluidity may be provided.

Method of preparing thermoplastic resin composition

In the present disclosure, for example, the method of preparing a thermoplastic resin composition may include a step of preparing the vinyl cyanide compound-conjugated diene rubber-aromatic vinyl compound graft copolymer; and a step of adding 15 to 35 % by weight of the prepared graft copolymer and 65 to 85 % by weight of an aromatic vinyl compound-vinyl cyanide compound copolymer into an extruder, performing melt-kneading, and performing extrusion. In this case, fluidity, gloss, and impact resistance may be excellent.

Preferably, the method of preparing a thermoplastic resin composition may include a step of preparing the vinyl cyanide compound-conjugated diene rubber-aromatic vinyl compound graft copolymer; and a step of adding 20 to 30 % by weight of the prepared graft copolymer and 70 to 80 % by weight of an aromatic vinyl compound-vinyl cyanide compound copolymer into an extruder, performing melt-kneading, and performing extrusion. In this case, fluidity, gloss, and impact resistance may be excellent.

For example, the melt-kneading and extrusion step may be performed at a barrel temperature of 200 to 330 °C, preferably 210 to 300 °C, more preferably 210 to 280 °C, still more preferably 220 to 250 °C. In this case, throughput per unit time may be appropriate, and melt-kneading may be performed sufficient. In addition, thermal decomposition of resin components may be prevented.

For example, the melt-kneading and extrusion step may be performed at a screw rotation speed of 100 to 500 rpm, preferably 150 to 400 rpm, more preferably 100 to 350 rpm, still more preferably 200 to 310rpm, most preferably 250 to 350 rpm. In this case, due to appropriate throughput per unit time, process efficiency may be excellent, and over-cutting of glass fiber may be suppressed.

For example, the melt-kneading may be performed using a Banbury mixer, a single-screw extruder, a twinscrew extruder, or a kneader, but the present invention is not particularly limited thereto.

For example, when the melt-kneading is performed, based on 100 parts by weight of the thermoplastic resin composition (graft copolymer + other thermoplastic resins), one or more additives selected from the group consisting of colorants, heat stabilizers, light stabilizers, reinforcing agents, fillers, flame retardants, lubricants, plasticizers, antistatic agents, and processing aids may be added in an amount of 0.1 to 10 parts by weight, preferably 0.1 to 5 parts by weight.

For example, the aromatic vinyl compound-vinyl cyanide compound copolymer may include 65 to 85 % by weight of an aromatic vinyl compound and 15 to 35 % by weight of a vinyl cyanide compound, preferably 70 to 80 % by weight of an aromatic vinyl compound and 20 to 30 % by weight of a vinyl cyanide compound. Within this range, due to appropriate fluidity, processability and impact resistance may be excellent.

In the present disclosure, a polymer including a certain compound means a polymer prepared by polymerizing the compound, and a unit in the polymer is derived from the compound.

For example, the aromatic vinyl compound-vinyl cyanide compound copolymer may be prepared by solution polymerization or bulk polymerization, preferably bulk polymerization. In this case, heat resistance and fluidity may be excellent.

Solution polymerization and bulk polymerization commonly practiced in the art to which the present invention pertains may be used in the present invention without particular limitation.

Molded article

A molded article having excellent impact resistance may be manufactured using the graft copolymer or the thermoplastic resin composition.

The molded article may preferably include the thermoplastic resin composition. In this case, fluidity and high gloss may be excellent. In addition, compared to the conventional ABS resin, impact resistance may be greatly improved, and productivity and appearance may be excellent.

[Examples]

Hereinafter, the present invention is specifically described with reference to examples, but the present invention is not limited thereto. In addition, "part" and "%" shown in the examples are based on weight.

## Example 1

<Preparation of diene-based rubber polymer>

90 parts by weight of ion-exchange water, 30 parts by weight of 1,3-butadiene, 1 part by weight of oleic acid saponifiable matter, 0.4 parts by weight of potassium carbonate, 0.15 parts by weight of t-dodecyl mercaptan, 0.15 parts by weight of t-butyl hydroperoxide, 0.06 parts by weight of dextrose, 0.005 parts by weight of sodium pyrrolate, and 0.0025 parts by weight of ferrous sulfate were fed into a nitrogen-substituted polymerization reactor batchwise.

Polymerization was performed in the reactor at 55 °C for 5 hours.

Then, polymerization was performed by continuously feeding 70 parts by weight of 1,3-butadiene and 0.3 parts by weight of t-dodecyl mercaptan at a constant speed while increasing temperature to 78 °C. At this time, the continuous feeding was performed for 9 hours.

Then, when the polymerization conversion rate reached 30 to 40 %, 0.1 parts by weight of potassium persulfate and 0.15 parts by weight of a rosin acid emulsifier were fed batchwise.

Then, when the polymerization conversion rate reached 95%, the polymerization was terminated to prepare a diene-based rubber polymer latex.

<Thickening of diene-based rubber polymer latex>

0.9 parts by weight of acetic acid was added to 100 parts by weight (based on solids) of the diene-based rubber polymer latex to thicken the diene-based rubber polymer latex.

The average particle diameter of the thickened diene-based rubber polymer latex was 3,450 Å.

<Preparation of graft copolymer>

A first mixture containing 15 parts by weight of acrylonitrile, 30 parts by weight of styrene, 0.4 parts by weight of dimer acid saponifiable matter, 0.35 parts by weight of t-dodecyl mercaptan, and 20 parts by weight of ion-exchange water was prepared.

A second mixture containing 0.12 parts by weight of t-butyl hydroperoxide, 0.054 parts by weight of dextrose, 0.004 parts by weight of sodium pyrrolate, and 0.002 parts by weight of ferrous sulfate was prepared.

55 parts by weight (based on solids) of the thickened diene-based rubber polymer latex and 100 parts by weight of ion-exchange water were fed into the nitrogen-substituted polymerization reactor batchwise.

Then, polymerization was performed while continuously feeding the first and second mixtures into the reactor at 70 °C for 3 hours at a constant speed, respectively.

Then, 0.05 parts by weight of dextrose, 0.03 parts by weight of sodium pyrrolate, 0.001 parts by weight of ferrous sulfate, and 0.05 parts by weight of t-butyl hydroperoxide were fed into the reactor, the temperature of the reactor was increased to 80 °C for 1 hour at a constant rate, and the polymerization was terminated to obtain a graft copolymer latex.

The graft copolymer latex was subjected to coagulation, maturation, washing, dehydration, and drying to obtain graft copolymer powder.

<Preparation of thermoplastic resin composition>

30 parts by weight of the graft copolymer powder and 70 parts by weight of a styrene-acrylonitrile polymer (LG Chemical Co., weight average molecular weight: 120,000 g/mol) containing 73 % by weight of styrene and 28 % by weight of acrylonitrile were mixed to prepare a thermoplastic resin composition.

**Comparative Example 1**

<Preparation of diene-based rubber polymer>

75 parts by weight of ion-exchange water, 90 parts by weight of 1,3-butadiene, 1.6 parts by weight of oleic acid saponifiable matter, 0.1 parts by weight of potassium carbonate, 0.1 parts by weight of t-dodecyl mercaptan, 0.15 parts by weight of t-butyl hydroperoxide, 0.06 parts by weight of dextrose, 0.005 parts by weight of sodium pyrrolate, and 0.0025 parts by weight of ferrous sulfate were fed into a nitrogen-substituted polymerization reactor batchwise.
Polymerization was performed in the reactor at 55 °C. When the polymerization conversion rate reached 30 to 40 %, 0.3 parts by weight of potassium persulfate was fed batchwise.
Then, the reactor was heated to 72 °C. When the polymerization conversion rate reached 60 to 70 %, 10 parts by weight of 1,3-butadiene was fed batchwise.
Then, when the polymerization conversion rate reached 95 %, the polymerization was terminated to prepare a diene-based polymer latex.
The average particle diameter of the obtained diene-based rubber polymer latex was 1,155 Å.

<Thickening of diene-based rubber polymer latex>

1.5 parts by weight of acetic acid was added to 100 parts by weight (based on solids) of the diene-based rubber polymer latex to thicken the diene-based rubber polymer latex.
The average particle diameter of the thickened diene-based rubber polymer latex was 3,020 Å.

<Preparation of graft copolymer> and <Preparation of thermoplastic resin composition>

Each procedure was performed as in Example 1.

**Comparative Example 2**

The same procedure was performed as in Example 1, except that, in <Preparation of diene-based rubber polymer> of Example 1, 0.4 parts by weight of oleic acid saponifiable matter was added. The average particle diameter of the thickened diene-based rubber polymer latex was 3,255 Å.

**Comparative Example 3**

The same procedure was performed as in Example 1, except that, in <Preparation of diene-based rubber polymer> of Example 1, polymerization was performed at a reaction temperature of 51 °C and the temperature was increased to 69 °C.

**Comparative Example 4**

The same procedure was performed as in Example 1, except that, in <Preparation of diene-based rubber polymer> of Example 1, polymerization was performed at a reaction temperature of 60 °C and the temperature was increased to 80 °C.

**Comparative Example 5**

The same procedure was performed as in Example 1, except that, in <Thickening of diene-based rubber polymer latex> of Example 1, 1.4 parts by weight of acetic acid was added.

## Comparative Example 6

The same procedure was performed as in Example 1, except that, in <Thickening of diene-based rubber polymer latex> of Example 1, 2.3 parts by weight of acetic acid was added.

## Comparative Example 7

The same procedure was performed as in Example 1, except that, in <Thickening of diene-based rubber polymer latex> of Example 1, 2.5 parts by weight of acetic acid was added.

## <Experimental Example 1-1>

The physical properties of the diene-based rubber polymers of Example 1 and Comparative Examples 1 to 7 were measured as follows.

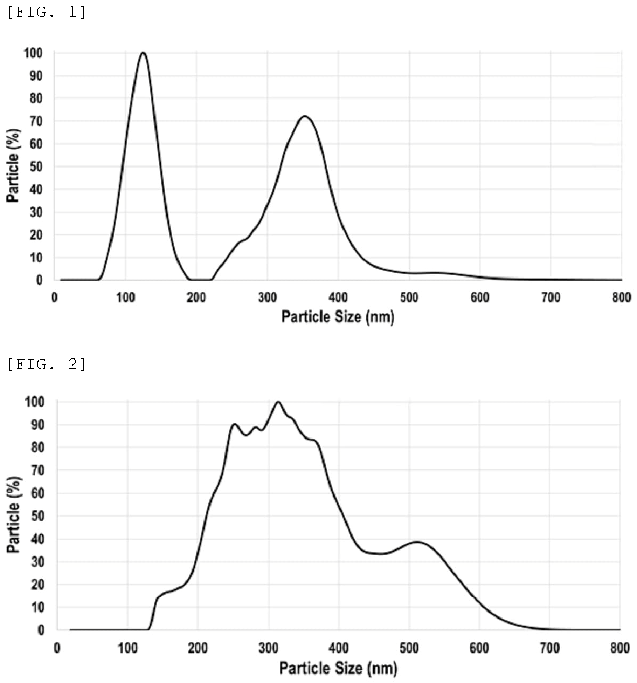

1) Microstructure: The ratio (%) of cis-1,4-bond, trans-1,4-bond, and 1,2-bond of the thickened diene-based rubber polymer latex was analyzed using 13C 1D Normal NMR, and the results are shown in Table 1 below.
2) Polydisperse particle diameter distribution: For the thickened diene-based rubber polymer latex, capillary hydrodynamic fractionation (CHDF) particle diameter distribution was measured using MATEC CHDF 4000 equipment (Mass Applied Science), a first particle diameter distribution section of 200 Å to 1,800 Å and a second particle diameter distribution section of 1,800 Å to 8,000 Å were confirmed, and the results are shown in Table 1.
3) Weight ratio of first and second diene-based rubber polymers : For the thickened diene-based rubber polymer latex, the weight ratio values for each particle diameter distribution section (first and second) provided by CHDF equipment were read, and the results are shown in Table 1. For reference, the particle diameter distribution section measured by the CHDF equipment is shown in FIG. 1 below.

Here, the first particle diameter rubber polymer means an analysis value counted within a first particle diameter distribution section of 200 Å to 1,800 Å, and the second particle diameter rubber polymer means an analysis value counted within a second particle diameter distribution section of 1,800 Å to 8,000 Å.

4) Particle circularity measurement: For the thickened diene-based rubber polymer latex, the ratio of the major axis length to minor axis length of a particle was measured, and the circularity of the particle was calculated based on the average value thereof. Specifically, after each latex was analyzed using TEM equipment (JEM-1400, Jeol), the major axis length and minor axis length of each of 50 particles were measured, and the particle circularity was calculated using Equation 1 below, and the results are shown in Table 1 below.

$$[\text{Equation 1}]$$

$$\text{Circularity} = \frac{1}{50} \sum_{i=1}^{50} D_i$$

In Equation 1, Di represents the ratio of major axis length to minor axis length [Major axis length/Minor axis length] of an i-th particle.

Specifically, each latex was analyzed by the TEM equipment (JEM-1400, Jeol, 40K) and at least 50 to 100 particles were identified. In the images where 50 particles were identified, the major and minor axis lengths of each particle were measured and the circularity was calculated. For reference, more than 200 particles were identified in TEM equipment (JEM-1400, Jeol, 25K), less than 50 particles were identified in TEM equipment (JEM-1400, Jeol, 50K), and less than 10 particles were identified in TEM equipment (JEM-1400, Jeol, 100K).

5) Average particle diameter (Å): 0.1 g of the thickened diene-based rubber polymer latex was mixed with 100 g of distilled water, and the intensity value was measured in Gaussian mode by dynamic light scattering using Nicomp 380 equipment (manufacturer: PSS), and the results are shown in Table 1 below.

## <Experimental Example 1-2>

The physical properties of the graft copolymer powder of Example 1 and Comparative Examples 1 to 7 were measured as follows.

1) Swelling degree: 2 g of the graft copolymer powder was immersed in 300 ml of acetone and stirred for 24 hours. Insoluble matter was extracted from this solution.

The insoluble matter was immersed in 100 ml of toluene for 48 hours. When filtered through a 100-mesh wire mesh, the weight of toluene-insoluble matter (weight a) and the weight of vacuum-dried toluene-insoluble matter (weight b) were measured. The swelling degree was calculated by Equation 5 below, and the results are shown in Table 1 below.

Swelling degree = Weight (weight a) of toluene-insoluble matter / Weight (weight b) after vacuum drying          [Equation 5]

<Experimental Example 1-3>

100 parts by weight of the thermoplastic resin composition of Example 1 and Comparative Examples 1 to 7 was mixed with 1 part by weight of a lubricant and 0.1 parts by weight of a heat stabilizer, and kneading and extrusion was performed at 210 °C and 160 rpm to obtain pellets.
The obtained pellets were injected using an injection molding machine (injection temperature: 230 °C, injection pressure: 80 bar, Engel ES 200/45 HL-Pro Series), followed by drying at 25 °C and a relative humidity of $50\pm5$ °C for 12 hours to manufacture specimens.
The physical properties of the specimens were measured using the methods described below.

1) Impact strength: For the obtained specimens, the Izod impact strength (unit: kgf·cm/cm) was measured at a thickness of 1/4" using a Tinius Olsen (product name: Model Impact 104, manufacturer: Tinius Olsen test machine company) according to ASTM D256, and the results are shown in Table 1 below.
2) Melting index: For the obtained specimens, the melting index (unit: g/10 min) was measured at 220 °C under a load of 10 kg according to ASTM 648, and the results are shown in Table 1 below.
3) Gloss: For the obtained specimens, the gloss was measured at 45° using a gloss meter according to ASTM D528, and the results are shown in Table 1 below. As the value increases, the surface gloss improves.

[Table 1]

| Classification | Physical properties | Example 1 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Diene-based rubber polymer | Latex particle circularity | 1.06 | 1.53 | 1.02 | 1.12 | 1.14 | 1.08 | 1.33 | 1.39 |
| | 1.4-BD(Cis) (%) | 23.9 | 23.9 | 23.9 | 19.7 | 30.2 | 23.8 | 23.5 | 23.8 |
| | 1,4-BD(Trans) (%) | 59.8 | 59.8 | 59.8 | 65.2 | 54.5 | 60.0 | 60.1 | 59.8 |
| | 1,2-BD(Vinyl) (%) | 16.3 | 16.3 | 16.3 | 15.1 | 15.3 | 16.1 | 16.4 | 15.3 |
| | Average particle diameter of rubber particles (Å) | 3,450 | 3,255 | 3,255 | 3,220 | 3,250 | 2,920 | 4,120 | 4,440 |
| | Polydispe rse particle diameter distribut ion_first (wt %) | 58 | 55 | 59 | 59 | 55 | 74 | 49 | 46 |
| | Polydispe rse particle diameter distribut ion_secon d (wt %) | 42 | 45 | 41 | 41 | 45 | 26 | 51 | 64 |
| | First:sec ond weight ratio | 1:0 .72 4 | 1:0.8 18 | 1:0.6 94 | 1:0.6 94 | 1:0.8 18 | 1:0.3 51 | 1:1.0 4 | 1:173 |
| Graft copolymer | Swelling degree | 14.5 | 14.6 | 14.4 | 14.6 | 14.7 | 13.8 | 14.1 | 14.7 |
| Thermo plas-tic resin com-position | 1/4" impact strength (kgf.cm/ cm) | 25.3 | 18.1 | 18.2 | 18.0 | 19.8 | 17.8 | 19.5 | 18.4 |
| | Melting index (g/10 min) | 31.8 | 25.7 | 24.0 | 25.8 | 24.5 | 25.3 | 24.3 | 24.1 |
| | Gloss (45°) | 99 | 85 | 85 | 85 | 86 | 88 | 84 | 82 |

As shown in Table 1, in the case of the diene-based rubber polymer of Example 1 in which the circularity of the latex particles follows the present invention, compared to Comparative Examples 1 to 7 outside the range of the present invention, impact strength was greatly improved, and melting index and gloss were significantly improved.

In addition, in the case of Comparative Examples 3 and 4 in which the microstructure is outside the range of the present invention, compared to Example 1, impact strength was significantly reduced, and melting index and gloss were also reduced.

In addition, in the case of Comparative Examples 5 to 7 in which the average particle diameter is outside the range of the present invention, compared to Example 1, impact strength was significantly reduced, and melting index and also gloss were reduced.

In addition, FIG. 1 below is a diagram showing the polydisperse particle diameter distribution according to Example 1. As shown in FIG. 1 below, a bimodal distribution is shown.

Specifically, as shown in FIG. 1 below, a bimodal distribution according to the present invention was observed. The first particle diameter distribution section of 200 to 1,800 Å accounted for 47.7 % by weight, and the second particle diameter distribution section of 1,800 to 8,000 Å accounted for 52.3 % by weight. Here, the small-diameter region may directly affect the gloss of the thermoplastic resin composition including the graft copolymer, and the large-diameter region may directly affect the impact strength thereof.

In particular, it was confirmed that the thermoplastic resin composition according to the present invention had excellent physical property balance between impact resistance and fluidity due to excellent impact strength and melting index. In addition, the thermoplastic resin composition exhibited a gloss of 95 or more at 45°, and thus was suitable for products requiring high gloss. In addition, the thermoplastic resin composition exhibited a uniform sphere form having a circularity of 1.06.

**<Experimental Example 1-4>**

**Additional Comparative Example 1**

The same procedure was performed as in Example 1, except that, in <Preparation of diene-based rubber polymer> of Example 1, 3.0 parts by weight of oleic acid saponifiable matter was added. The average particle diameter of the thickened diene-based rubber polymer latex was 3,020 Å.

**Additional Comparative Example 2**

The same procedure was performed as in Example 1, except that, in <Thickening of diene-based rubber polymer latex> of Example 1, 1.8 parts by weight of acetic acid was added. The average particle diameter of the thickened diene-based rubber polymer latex was 3,970 Å.

**Additional Comparative Example 3**

The same procedure was performed as in Example 1, except that, in <Preparation of diene-based rubber polymer> of Example 1, the reaction was terminated at a polymerization conversion rate of 99 %.

**Additional Comparative Example 4**

The same procedure was performed as in Example 1, except that, in <Preparation of diene-based rubber polymer> of Example 1, the reaction was terminated at a polymerization conversion rate of 90 %.

As described above, specimens were manufactured and the physical properties thereof were measured, and the results are shown in Table 2 below.

[Table 2]

| Classification | Physical properties | Example 1 | Additional Comparative Example 1 | AdditionalComparative Example 2 | AdditionalComparative Example 3 | AdditionalComparative Example 4 |
|---|---|---|---|---|---|---|
| Diene-based rubber polymer | Latex particle circularity | 1.06 | 1.07 | 1.11 | 1.08 | 1.09 |
| | 1.4-BD(Cis) (%) | 23.9 | 23.9 | 23.9 | 23.9 | 23.9 |
| | 1,4-BD(Trans) (%) | 59.8 | 59.8 | 59.8 | 59.8 | 59.8 |
| | 1,2-BD(Vinyl) (%) | 16.3 | 16.3 | 16.3 | 15.3 | 15.3 |
| | Average particle diameter of rubber particles (Å) | 3,450 | 3,020 | 3,970 | 3,210 | 3,195 |
| | Polydisperse particle diameter distribution_f irst (wt %) | 58 | 76 | 44 | 56 | 59 |
| | Polydisperse particle diameter distribution_s econd (wt %) | 42 | 24 | 56 | 44 | 41 |
| | First:second weight ratio | 1:0.7 24 | 1:0.315 | 1:1.272 | 1:0.785 | 1:0.694 |
| Graft copolymer | Swelling degree | 14.5 | 14.3 | 14.4 | 9.4 | 16.4 |
| Thermoplastic resin composition | 1/4" impact strength (kgf.cm/cm) | 25.3 | 17.9 | 18.3 | 18.1 | 19.4 |
| | Melting index (g/10 min) | 31.8 | 25.2 | 23.9 | 25.7 | 24.0 |
| | Gloss (45°) | 99 | 92 | 85 | 86 | 88 |

As shown in Table 2, in the case of the diene-based rubber polymer of Example 1 in which the circularity of the latex particles follows the present invention, compared to Additional Comparative Examples 1 to 4 outside the range of the present invention, impact strength was greatly improved, and melting index and gloss were significantly improved.

In addition, in the case of Additional Comparative Examples 1 and 2 in which the weight ratio of particles included in the polydisperse particle diameter distribution section is outside the range of the present invention, compared to Example 1, impact strength was significantly reduced, and melting index and gloss were also reduced.

In addition, in the case of Additional Comparative Examples 3 and 4 in which the swelling degree is outside the range of the present invention, compared to Example 1, impact strength was significantly reduced, and melting index and gloss were also reduced.

## Example 2

<Preparation of diene-based rubber polymer>

90 parts by weight of ion-exchange water, 30 parts by weight of 1,3-butadiene, 1 part by weight of oleic acid saponifiable matter, 0.4 parts by weight of potassium carbonate, 0.15 parts by weight of t-dodecyl mercaptan, 0.15 parts by weight of t-butyl hydroperoxide, 0.06 parts by weight of dextrose, 0.005 parts by weight of sodium pyrrolate, and 0.0025 parts by weight of ferrous sulfate were fed into a nitrogen-substituted polymerization reactor batchwise.

Polymerization was performed in the reactor at 55 °C for 5 hours.

Then, polymerization was performed by continuously feeding 70 parts by weight of 1,3-butadiene and 0.3 parts by weight of t-dodecyl mercaptan at a constant speed while increasing temperature to 78 °C. At this time, the continuous feeding was performed for 9 hours.

Then, when the polymerization conversion rate reached 30 to 40 %, 0.1 parts by weight of potassium persulfate and 0.15 parts by weight of a rosin acid emulsifier were fed batchwise.

Then, when the polymerization conversion rate reached 95%, the polymerization was terminated to prepare a diene-based rubber polymer latex. At this time, the average particle diameter of the diene-based rubber polymer latex was 1,180 Å.

<Thickening of diene-based rubber polymer latex>

0.9 parts by weight of acetic acid was added to 100 parts by weight (based on solids) of the diene-based rubber polymer latex to thicken the diene-based rubber polymer latex.

The average particle diameter of the thickened diene-based rubber polymer latex was 3,350 Å.

<Preparation of graft copolymer>

A first mixture containing 15 parts by weight of acrylonitrile, 30 parts by weight of styrene, 0.4 parts by weight of dimer acid saponifiable matter, 0.35 parts by weight of t-dodecyl mercaptan, and 20 parts by weight of ion-exchange water was prepared.

A second mixture containing 0.12 parts by weight of t-butyl hydroperoxide, 0.054 parts by weight of dextrose, 0.004 parts by weight of sodium pyrrolate, and 0.002 parts by weight of ferrous sulfate was prepared.

55 parts by weight (based on solids) of the thickened diene-based rubber polymer latex and 100 parts by weight of ion-exchange water were fed into the nitrogen-substituted polymerization reactor batchwise.

Then, polymerization was performed while continuously feeding the first and second mixtures into the reactor at 70 °C for 3 hours at a constant speed, respectively.

Then, 0.05 parts by weight of dextrose, 0.03 parts by weight of sodium pyrrolate, 0.001 parts by weight of ferrous sulfate, and 0.05 parts by weight of t-butyl hydroperoxide were fed into the reactor, the temperature of the reactor was increased to 80 °C for 1 hour at a constant rate, and the polymerization was terminated to obtain a graft copolymer latex.

The graft copolymer latex was subjected to coagulation, maturation, washing, dehydration, and drying to obtain graft copolymer powder.

<Preparation of thermoplastic resin composition>

30 parts by weight of the graft copolymer powder and 70 parts by weight of a styrene-acrylonitrile polymer (LG Chemical Co., weight average molecular weight: 120,000 g/mol) containing 73 % by weight of styrene and 28 % by weight of acrylonitrile were mixed to prepare a thermoplastic resin composition.

## Comparative Example 8

<Preparation of diene-based rubber polymer>

75 parts by weight of ion-exchange water, 90 parts by weight of 1,3-butadiene, 1.6 parts by weight of oleic acid saponifiable matter, 0.1 parts by weight of potassium carbonate, 0.1 parts by weight of t-dodecyl mercaptan, 0.15 parts by weight of t-butyl hydroperoxide, 0.06 parts by weight of dextrose, 0.005 parts by weight of sodium pyrrolate, and 0.0025 parts by weight of ferrous sulfate was fed into a nitrogen-substituted polymerization reactor batchwise.

Polymerization was performed in the reactor at 55 °C. When the polymerization conversion rate reached 30 to 40 %, 0.3 parts by weight of potassium persulfate was fed batchwise.

Then, the reactor was heated to 72 °C. When the polymerization conversion rate reached 60 to 70 %, 10 parts by weight of 1,3-butadiene was fed batchwise.

Then, when the polymerization conversion rate reached 95 %, the polymerization was terminated to prepare a diene-based polymer latex.

<Thickening of diene-based rubber polymer latex>

1.5 parts by weight of acetic acid was added to 100 parts by weight (based on solids) of the diene-based rubber polymer latex to thicken the diene-based rubber polymer latex.

The average particle diameter of the thickened diene-based rubber polymer latex was 3,365 Å.

<Preparation of graft copolymer> and <Preparation of thermoplastic resin composition>

Each procedure was performed in the same manner as in Example 2.

**Comparative Example 9**

The same procedure was performed as in Example 2, except that, in <Preparation of diene-based rubber polymer> of Example 2, 0.4 parts by weight of oleic acid saponifiable matter was added. The average particle diameter of the thickened diene-based rubber polymer latex was 3,280 Å.

<Experimental Example 2-1>

The physical properties of the diene-based rubber polymers of Example 2 and Comparative Examples 8 and 9 were measured as follows.

1) Microstructure: The ratio (%) of cis-1,4-bond, trans-1,4-bond, and 1,2-bond of the thickened diene-based rubber polymer latex was analyzed using 13C 1D Normal NMR, and the results are shown in Table 3 below.

2) Polydisperse particle diameter distribution: For the thickened diene-based rubber polymer latex, capillary hydrodynamic fractionation (CHDF) particle diameter distribution was measured using MATEC CHDF 4000 equipment (Mass Applied Science), and a first particle diameter distribution section of 1,500 Å to 3,000 Å and a second particle diameter distribution section of 3,000 Å to 8,000 Å were confirmed. The results are shown in Table 3 below.

3) Weight ratio of first and second diene-based rubber polymers: For the thickened diene-based rubber polymer latex, the weight ratio values for each particle diameter distribution section (first and second) provided by CHDF equipment were read, and the results are shown in Table 3. For reference, the particle diameter distribution section measured by the CHDF equipment is shown in FIG. 2 below.

Here, the first particle diameter rubber polymer means an analysis value counted within a first particle diameter distribution section of 1,500 Å to 3,000 Å, and the second particle diameter rubber polymer means an analysis value counted within a second particle diameter distribution section of 3,000 Å to 8,000 Å.

4) Particle circularity measurement: For the thickened diene-based rubber polymer latex, the ratio of the major axis length to minor axis length of a particle was measured, and the circularity of the particle was calculated based on the average value thereof. Specifically, after each latex was analyzed using TEM equipment (JEM-1400, Jeol), the major axis length and minor axis length of each of 50 particles were measured, and the particle circularity was calculated using Equation 1 below, and the results are shown in Table 3 below.

[Equation 1]

$$\text{Circularity} = \frac{1}{50} \sum_{i=1}^{50} D_i$$

In Equation 1, Di represents the ratio of major axis length to minor axis length [Major axis length/Minor axis length] of an i-th particle.

Specifically, each latex was analyzed by the TEM equipment (JEM-1400, Jeol, 40K) and at least 50 to 100 particles were identified. In the images where 50 particles were identified, the major and minor axis lengths of each particle were measured and the circularity was calculated.

5) Average particle diameter (Å): 0.1 g of the thickened diene-based rubber polymer latex was mixed with 100 g of distilled water, and the intensity value was measured in Gaussian mode by dynamic light scattering using Nicomp 380 equipment (manufacturer: PSS), and the results are shown in Table 3 below.

6) Swelling degree measurement: The thickened diene-based rubber polymer latex was dropped into a mixture obtained by mixing an aqueous ethanol solution having a volume ratio of 1:1 and 1% by weight of sulfuric acid based on the aqueous ethanol solution to obtain solids, and the solids was completely dried.

About 1 g of the obtained solids was immersed in 100 ml of toluene at room temperature for 24 hours in a darkroom and then was filtered through a 100-mesh wire mesh to obtain toluene-insoluble matter.

The toluene-insoluble matter was completely dried, and the value obtained by dividing the weight before complete drying by the weight after complete drying is shown in Table 3 below.

**<Experimental Example 2-2>**

The physical properties of the graft copolymer powder of Example 2 and Comparative Examples 8 and 9 were measured as follows.

1) Swelling degree: 2 g of the graft copolymer powder was immersed in 300 ml of acetone and stirred for 24 hours. Insoluble matter was extracted from this solution.

The insoluble matter was immersed in 100 ml of toluene for 48 hours. When filtered through a 100-mesh wire mesh, the weight of toluene-insoluble matter (weight a) and the weight of vacuum-dried toluene-insoluble matter (weight b) were measured. The swelling degree was calculated by Equation 5 below, and the results are shown in Table 3 below.

Swelling degree = Weight (weight a) of toluene-insoluble matter / Weight (weight b) after vacuum drying                [Equation 5]

**<Experimental Example 2-3>**

100 parts by weight of the thermoplastic resin composition of Example 2 and Comparative Examples 8 and 9 was mixed with 1 part by weight of a lubricant and 0.1 parts by weight of a heat stabilizer, and kneading and extrusion was performed at 210 °C and 160 rpm to obtain pellets.

The obtained pellets were injected using an injection molding machine (injection temperature: 230 °C, injection pressure: 80 bar, Engel ES 200/45 HL-Pro Series), followed by drying at 25 °C and a relative humidity of $50 \pm 5$ °C for 12 hours to manufacture specimens.

The physical properties of the specimens were measured using the methods described below.

1) Impact strength: For the obtained specimens, the Izod impact strength (unit: kgf·cm/cm) was measured at a thickness of 1/4" using a Tinius Olsen (product name: Model Impact 104, manufacturer: Tinius Olsen test machine company) according to ASTM D256, and the results are shown in Table 3 below.

2) Melting index: For the obtained specimens, the melting index (unit: g/10 min) was measured at 220 °C under a load of 10 kg according to ASTM 648, and the results are shown in Table 3 below.

[Table 3]

| Classification | Physical properties | Example 2 | Comparative Example 12 | Comparative Example 13 |
|---|---|---|---|---|
| Diene-based rubber polymer | Latex particle circularity | 1.07 | 1.53 | 1.02 |
| | 1.4-BD(Cis) (%) | 23.8 | 23.8 | 23.8 |
| | 1,4-BD(Trans) (%) | 60.0 | 60.0 | 60.0 |
| | 1,2-BD(Vinyl) (%) | 16.2 | 16.2 | 16.2 |
| | Swelling degree | 7.8 | 7.7 | 7.8 |
| | Average particle diameter of rubber particles (Å) | 3,350 | 3,365 | 3,280 |
| | Polydisperse particle diameter distribution_first (wt %) | 25 | 26 | 24 |
| | Polydisperse particle diameter distribution_second (wt %) | 75 | 74 | 76 |
| Graft copolymer | Swelling degree | 13.5 | 13.7 | 13.1 |
| Thermoplastic resin composition | 1/4" impact strength (kgf.cm/cm) | 23.6 | 17.9 | 18.2 |
| | Melting index (g/10 min) | 24.5 | 17.5 | 16.6 |

As shown in Table 2, in the case of the diene-based rubber polymer of Example 2 in which the circularity of the latex particles follows the present invention, compared to Comparative Examples 8 and 9 outside the range of the present invention, both impact strength and melting index were significantly improved.

In particular, in the case of Comparative Examples 8 and 9 in which the circularity is outside the range of the present invention, compared to Example 2, impact strength was significantly reduced, and melting index was also reduced.

In addition, FIG. 2 is a diagram showing the polydisperse particle diameter distribution according to Example 2. As shown in FIG. 2 below, a bimodal or trimodal (corresponding to multi modal) distribution was confirmed.

Specifically, as shown FIG. 2 below, several peaks were observed. A first particle diameter distribution section of 1,500 to 3,000 Å accounted for 32.9 % by weight, and a second particle diameter distribution section of 3,000 to 8,000 Å accounted for 67.1 % by weight. Here, the small-diameter region may affect the physical properties such as melting index of the thermoplastic resin composition including the graft copolymer, and the large-diameter region may directly affect the impact strength thereof.

In particular, it was confirmed that the thermoplastic resin composition according to the present invention has excellent physical property balance between impact resistance and fluidity due to excellent impact strength and melting index, and is suitable for products requiring high fluidity. In addition, the thermoplastic resin composition exhibited a uniform sphere form having a circularity of 1.06.

**<Experimental Example 2-4>**

**Additional Comparative Example 5**

The same procedure was performed as in Example 2, except that, in <Preparation of diene-based rubber polymer> of Example 2, 1.0 part by weight of oleic acid saponifiable matter was added. The average particle diameter of the thickened diene-based rubber polymer latex was 3,272 Å.

**Additional Comparative Example 6**

The same procedure was performed as in Example 2, except that, in <Thickening of diene-based rubber polymer latex> of Example 2, the reaction was terminated at a polymerization conversion rate of 91 %. The average particle diameter of the thickened diene-based rubber polymer latex was 3,360 Å.

**Additional Comparative Example 7**

The same procedure was performed as in Example 2, except that, in <Thickening of diene-based rubber polymer latex> of Example 2, 0.7 parts by weight of acetic acid was used. The average particle diameter of the thickened diene-based rubber polymer latex was 3,070 Å.

**Additional Comparative Example 8**

The same procedure was performed as in Example 2, except that, in <Thickening of diene-based rubber polymer latex> of Example 2, 1.5 parts by weight of acetic acid was used. The average particle diameter of the thickened diene-based rubber polymer latex was 3,860 Å.

**Additional Comparative Example 9**

The same procedure was performed as in Example 2, except that, in <Preparation of diene-based rubber polymer> of Example 2, 0.05 parts by weight of t-dodecyl mercaptan was used. The average particle diameter of the thickened diene-based rubber polymer latex was 3,275 Å.

**Additional Comparative Example 10**

The same procedure was performed as in Example 2, except that, in <Preparation of diene-based rubber polymer> of Example 2, 0.3 parts by weight of t-dodecyl mercaptan was used. The average particle diameter of the thickened diene-based rubber polymer latex was 3,365 Å.

As described above, specimens were manufactured and the physical properties thereof were measured, and the results are shown in Table 4 below.

[Table 4]

| Classification | Physical properties | Example 2 | Additional Comparative Example 5 | Additional Comparative Example 6 | Additional Comparative Example 7 | Additional Comparative Example 8 | Additional Comparative Example 9 | Additional Comparative Example 10 |
|---|---|---|---|---|---|---|---|---|
| Diene-based rubber polymer | Latex particle circularity | 1.07 | 1.07 | 1.06 | 1.08 | 1.06 | 1.07 | 1.06 |
| | 1,4-BD(Cis) (%) | 23.8 | 23.8 | 23.8 | 23.8 | 23.8 | 23.8 | 23.8 |
| | 1,4-BD(Trans) (%) | 60.0 | 60.0 | 60.0 | 60.0 | 60.0 | 60.0 | 60.0 |
| | 1,2-BD(Vinyl) (%) | 16.2 | 16.2 | 16.2 | 16.2 | 16.2 | 16.2 | 16.2 |
| | Swelling degree | 7.8 | 3.8 | 12.3 | 7.7 | 7.9 | 4.8 | 11.2 |
| | Average particle diameter of rubber particles (Å) | 3,350 | 3,272 | 3,360 | 3,070 | 3,860 | 3,275 | 3,365 |
| | Polydisperse particle diameter distribution_first (wt %) | 25 | 24 | 28 | 41 | 14 | 25 | 27 |
| | Polydisperse particle diameter distribution_second (wt %) | 75 | 76 | 72 | 59 | 86 | 75 | 73 |
| Graft copolymer | Swelling degree | 13.5 | 13.3 | 13.1 | 13.5 | 13.4 | 9.5 | 18.4 |
| Thermoplastic resin composition | 1/4" impact strength (kgf.cm/cm ) | 23.6 | 17.8 | 18.4 | 17.1 | 15.8 | 17.2 | 15.8 |
| | Melting index (g/10 min) | 24.5 | 16.8 | 17.3 | 16.4 | 15.9 | 16.4 | 16.1 |

As shown in Table 4, in the case of Additional Comparative Examples 5 and 6 in which the swelling degree is outside the range of the present invention, compared to Example 2, impact strength was significantly reduced, and melting index was also reduced.

In addition, in the case of Additional Comparative Examples 7 and 8 in which the content of particles included in the polydisperse particle diameter distribution section is outside the range of the present invention, compared to Example 2, impact strength was significantly reduced, and melting index was also reduced.

In addition, in the case of Additional Comparative Examples 9 and 10 in which the swelling degree of rubber particles is outside the range of the present invention, compared to Example 2, impact strength was significantly reduced, and melting index was also reduced.

## Example 3

### <Preparation of diene-based rubber polymer>

85 parts by weight of ion-exchange water, 30 parts by weight of 1,3-butadiene, 3 parts by weight of oleic acid saponifiable matter, 0.35 parts by weight of potassium carbonate, 0.1 parts by weight of t-dodecyl mercaptan, 0.15 parts by weight of t-butyl hydroperoxide, 0.06 parts by weight of dextrose, 0.005 parts by weight of sodium pyrrolate, and 0.0025 parts by weight of ferrous sulfate were fed into a nitrogen-substituted polymerization reactor batchwise.

Polymerization was performed at 55 °C in the reactor

Then, when the polymerization conversion rate reached 35 %, 0.3 parts by weight of potassium persulfate was added, the temperature was increased to 72 °C, and polymerization was performed until the polymerization conversion rate reached 65 %.

Then, 15 parts by weight of 1,3-butadiene, 0.1 parts by weight of potassium persulfate, and 0.3 parts by weight of oleic acid saponifiable matter were fed batchwise.

Then, when the polymerization conversion rate reached 95%, the polymerization was terminated to prepare a diene-based rubber polymer latex. At this time, the average particle diameter of the diene-based rubber polymer latex was 1,150 Å.

### <Thickening of diene-based rubber polymer latex>

0.95 parts by weight of acetic acid was added to 100 parts by weight (based on solids) of the diene-based rubber polymer latex to thicken the diene-based rubber polymer latex.

The average particle diameter of the thickened diene-based rubber polymer latex was 3,350 Å.

### <Preparation of graft copolymer>

A first mixture containing 15 parts by weight of acrylonitrile, 30 parts by weight of styrene, 0.4 parts by weight of dimer acid saponifiable matter, 0.35 parts by weight of t-dodecyl mercaptan, and 20 parts by weight of ion-exchange water was prepared.

A second mixture containing 0.12 parts by weight of t-butyl hydroperoxide, 0.054 parts by weight of dextrose, 0.004 parts by weight of sodium pyrrolate, and 0.002 parts by weight of ferrous sulfate was prepared.

55 parts by weight (based on solids) of the thickened diene-based rubber polymer latex and 100 parts by weight of ion-exchange water were fed into the nitrogen-substituted polymerization reactor batchwise.

Then, polymerization was performed while continuously feeding the first and second mixtures into the reactor at 70 °C for 3 hours at a constant speed, respectively.

Then, 0.05 parts by weight of dextrose, 0.03 parts by weight of sodium pyrrolate, 0.001 parts by weight of ferrous sulfate, and 0.05 parts by weight of t-butyl hydroperoxide were fed into the reactor, the temperature of the reactor was increased to 80 °C for 1 hour at a constant rate, and the polymerization was terminated to obtain a graft copolymer latex.

The graft copolymer latex was subjected to coagulation, maturation, washing, dehydration, and drying to obtain graft copolymer powder.

### <Preparation of thermoplastic resin composition>

30 parts by weight of the graft copolymer powder and 70 parts by weight of a styrene-acrylonitrile polymer (LG Chemical Co., weight average molecular weight: 120,000 g/mol) containing 73 % by weight of styrene and 28 % by weight of acrylonitrile were mixed to prepare a thermoplastic resin composition.

**Comparative Example 10**

The same procedure was performed as in Example 3, except that, in <Preparation of diene-based rubber polymer> of Example 3, 1.6 parts by weight of oleic acid saponifiable matter was added. The average particle diameter of the thickened diene-based rubber polymer latex was 3,335 Å.

**Comparative Example 11**

The same procedure was performed as in Example 3, except that, in <Preparation of diene-based rubber polymer> of Example 3, 0.4 parts by weight of oleic acid saponifiable matter was added. The average particle diameter of the thickened diene-based rubber polymer latex was 3,315 Å.

**Comparative Example 12**

The same procedure was performed as in Example 3, except that, in <Preparation of diene-based rubber polymer> of Example 3, the reaction temperature was increased from 51 °C to 69 °C. The average particle diameter of the thickened diene-based rubber polymer latex was 3,310 Å.

**Comparative Example 13**

The same procedure was performed as in Example 3, except that, in <Preparation of diene-based rubber polymer> of Example 3, the reaction temperature was increased from 60 °C to 80 °C. The average particle diameter of the thickened diene-based rubber polymer latex was 3,330 Å.

**Comparative Example 14**

The same procedure was performed as in Example 3, except that, in <Thickening of diene-based rubber polymer latex> of Comparative Example 3, 1.0 part by weight of acetic acid was included. The average particle diameter of the thickened diene-based rubber polymer latex was 2,680 Å.

**Comparative Example 15**

The same procedure was performed as in Example 3, except that, in <Thickening of diene-based rubber polymer latex> of Comparative Example 3, 2.0 parts by weight of acetic acid was included. The average particle diameter of the thickened diene-based rubber polymer latex was 4,470 Å.

**<Experimental Example 3-1>**

The physical properties of the diene-based rubber polymers of Example 3 and Comparative Examples 10 to 15 were measured as follows.

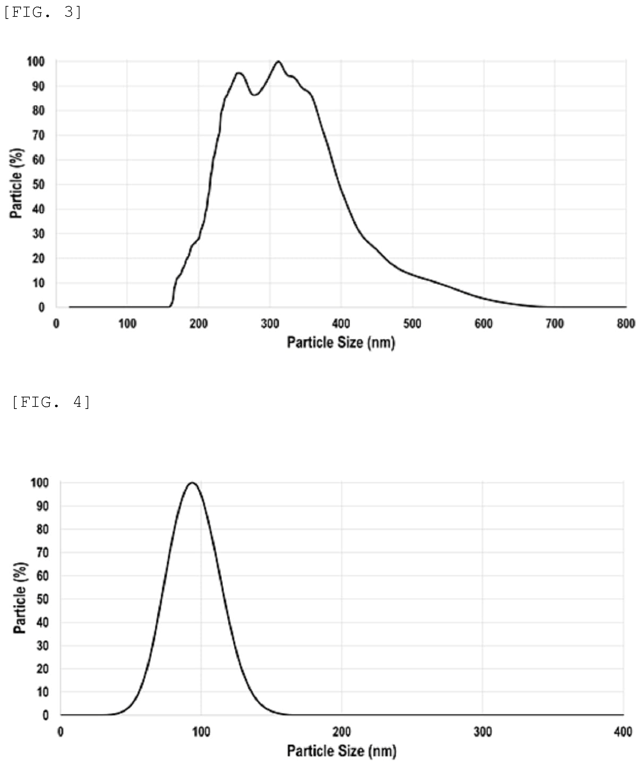

1) Microstructure: The ratio (%) of cis-1,4-bond, trans-1,4-bond, and 1,2-bond of the thickened diene-based rubber polymer latex was analyzed using 13C 1D Normal NMR, and the results are shown in Table 5 below.
2) Polydisperse particle diameter distribution: For the thickened diene-based rubber polymer latex, capillary hydrodynamic fractionation (CHDF) particle diameter distribution was measured using MATEC CHDF 4000 equipment (Mass Applied Science), and a first particle diameter distribution section of 1,500 Å to 3,000 Å and a second particle diameter distribution section of 3,000 Å to 8,000 Å were confirmed. The results are shown in Table 5 below.
3) Weight ratio of first and second diene-based rubber polymers: For the thickened diene-based rubber polymer latex, the weight ratio values for each particle diameter distribution section (first and second) provided by CHDF equipment were read, and the results are shown in Table 5. For reference, the particle diameter distribution section measured by the CHDF equipment is shown in FIG. 3 below.

Here, the first particle diameter rubber polymer means an analysis value counted within a first particle diameter distribution section of 1,500 Å to 3,000 Å, and the second particle diameter rubber polymer means an analysis value counted within a second particle diameter distribution section of 3,000 Å to 8,000 Å.

4) Particle circularity measurement: For the thickened diene-based rubber polymer latex, the ratio of the major axis length to minor axis length of a particle was measured, and the circularity of the particle was calculated based on the average value thereof. Specifically, after each latex was analyzed using TEM equipment (JEM-1400, Jeol), the major axis length and minor axis length of each of 50 particles were measured, and the particle circularity was calculated using Equation 1 below, and the results are shown in Table 5 below.

$$[Equation\ 1]$$

$$Circularity = \frac{1}{50} \sum_{i=1}^{50} D_i$$

In Equation 1, Di represents the ratio of major axis length to minor axis length [Major axis length/Minor axis length] of an i-th particle.

Specifically, each latex was analyzed by the TEM equipment (JEM-1400, Jeol, 40K) and at least 50 to 100 particles were identified. In the images where 50 particles were identified, the major and minor axis lengths of each particle were measured and the circularity was calculated.

5) Average particle diameter (Å): 0.1 g of the thickened diene-based rubber polymer latex was mixed with 100 g of distilled water, and the intensity value was measured in Gaussian mode by dynamic light scattering using Nicomp 380 equipment (manufacturer: PSS), and the results are shown in Table 5 below.

6) Swelling degree measurement: The thickened diene-based rubber polymer latex was dropped into a mixture obtained by mixing an aqueous ethanol solution having a volume ratio of 1:1 and 1% by weight of sulfuric acid based on the aqueous ethanol solution to obtain solids, and the solids was completely dried.

About 1 g of the obtained solids was immersed in 100 ml of toluene at room temperature for 24 hours in a darkroom and then was filtered through a 100-mesh wire mesh to obtain toluene-insoluble matter.

The toluene-insoluble matter was completely dried, and the value obtained by dividing the weight before complete drying by the weight after complete drying is shown in Table 5 below.

**<Experimental Example 3-2>**

The physical properties of the graft copolymer powder of Example 3 and Comparative Examples 10 to 15 were measured as follows.

1) Swelling degree: 2 g of the graft copolymer powder was immersed in 300 ml of acetone and stirred for 24 hours. Insoluble matter was extracted from this solution.

The insoluble matter was immersed in 100 ml of toluene for 48 hours. When filtered through a 100-mesh wire mesh, the weight of toluene-insoluble matter (weight a) and the weight of vacuum-dried toluene-insoluble matter (weight b) were measured. The swelling degree was calculated by Equation 5 below, and the results are shown in Table 5 below.

Swelling degree = Weight (weight a) of toluene-insoluble matter / Weight (weight b) after vacuum drying     [Equation 5]

**<Experimental Example 3>**

100 parts by weight of the thermoplastic resin composition of Example 3 and Comparative Examples 10 to 15 was mixed with 1 part by weight of a lubricant and 0.1 parts by weight of a heat stabilizer, and kneading and extrusion was performed at 210 °C and 160 rpm to obtain pellets.

The obtained pellets were injected using an injection molding machine (injection temperature: 230 °C, injection pressure: 80 bar, Engel ES 200/45 HL-Pro Series), followed by drying at 25 °C and a relative humidity of 50±5 °C for 12 hours to manufacture specimens.

The physical properties of the specimens were measured using the methods described below.

1) Impact strength: For the obtained specimens, the Izod impact strength (unit: kgf·cm/cm) was measured at a thickness of 1/4" using a Tinius Olsen (product name: Model Impact 104, manufacturer: Tinius Olsen test machine company) according to ASTM D256, and the results are shown in Table 5 below.

2) Melting index: For the obtained specimens, the melting index (unit: g/10 min) was measured at 220 °C under a load of 10 kg according to ASTM 648, and the results are shown in Table 5 below.

[Table 5]

| Classif ication | Physical properties | Example 3 | Comparative Example 10 | ComparativeExample 11 | ComparativeExample 12 | ComparativeExample 13 | ComparativeExample 14 | ComparativeExample 15 |
|---|---|---|---|---|---|---|---|---|
| Diene-based rubber poly-mer | Latex particle cir-cularity | 1.1 | 1.02 | 1.54 | 1.12 | 1.18 | 1.2 | 1.15 |
| | 1.4-BD(Cis) (%) | 24.3 | 24.3 | 24.3 | 19.5 | 30.4 | 24.2 | 24.4 |
| | 1,4-BD(Trans) (%) | 59.6 | 59.6 | 59.6 | 65.4 | 54.3 | 59.8 | 59.5 |
| | 1,2-BD(Vinyl) (%) | 16.1 | 16 | 16 | 15.1 | 15.3 | 16.0 | 16.1 |
| | Average particle diameter of rubber particles (Å) | 3,350 | 3,335 | 3,315 | 3,310 | 3,330 | 2,680 | 4,470 |
| | Polydisperse parti-cle diameter distri-bution_first (wt %) | 52 | 50 | 51 | 50 | 52 | 64 | 36 |
| | Polydisperse parti-cle diameter distri-bution_second (wt %) | 48 | 50 | 49 | 50 | 48 | 36 | 64 |
| | First:second weight ratio | 1:0.923 | 1:1 | 1:0.960 | 1:1 | 1:0.923 | 1:0.562 | 1:1.777 |
| Graft copolymer | Swelling degree | 13.4 | 13.1 | 13.3 | 13.3 | 13.1 | 12.9 | 12.6 |
| Thermoplastic resin composition | 1/4" impact strength (kgf.cm/cm) | 33.5 | 24.1 | 26.5 | 26.4 | 23.9 | 22.4 | 19.8 |
| | Melting index (g/10 min) | 23.6 | 17.8 | 18.1 | 18.0 | 17.9 | 19.9 | 20.3 |

As shown in Table 5, in the case of the diene-based rubber polymer of Example 3 in which the circularity of the latex particles follows the present invention, compared to Comparative Examples 10 to 15 outside the range of the present invention, both impact strength and melting index were significantly improved.

In particular, in the case of Comparative Examples 10 and 11 in which the circularity is outside the range of the present invention, compared to Example 3, impact strength was significantly reduced, and melting index was also reduced.

In addition, in the case of Comparative Examples 12 and 13 in which the microstructure of rubber particles is outside the range of the present invention, compared to Example 3, impact strength was significantly reduced, and melting index was also reduced.

In addition, in the case of Comparative Examples 14 and 15 in which the average particle diameter of rubber particles is outside the range of the present invention, compared to Example 3, impact strength was significantly reduced, and melting index was also reduced.

In addition, FIG. 3 below is a diagram showing a polydisperse particle diameter distribution according to Example 3. As shown in FIG. 3 below, a bimodal distribution is observed.

Specifically, as shown in FIG. 3 below, a bimodal distribution according to the present invention was observed, a first particle diameter distribution section of 500 to 3,000 Å accounted for 38.1 % by weight, and a second particle diameter distribution section of 3,000 to 8,000 Å accounted for 61.9 % by weight. Here, the small-diameter region may affect the physical properties such as melting index of the thermoplastic resin composition including the graft copolymer, and the large-diameter region may directly affect the impact strength thereof.

In particular, it was confirmed that the thermoplastic resin composition according to the present invention has excellent physical property balance between impact resistance and fluidity due to excellent impact strength and melting index, and is suitable for products requiring impact resistance. In addition, the thermoplastic resin composition exhibits a uniform sphere form having a circularity of 1.06.

**<Experimental Example 3-4>**

**<u>Additional Comparative Example 11</u>**

<Preparation of diene-based rubber polymer latex>

70 parts by weight of 1,3-butadiene, 75 parts by weight of ion-exchange water, 3 parts by weight of oleic acid saponifiable matter, 0.1 parts by weight of potassium carbonate, 0.1 parts by weight of t-dodecyl mercaptan, 0.15 parts by weight of t-butyl hydroperoxide, 0.06 parts by weight of dextrose, 0.005 parts by weight of tetrasodium pyrophosphate, and 0.0025 parts by weight of ferrous sulfate were fed into a nitrogen-substituted polymerization reactor, the temperature was increased to 55 °C, polymerization was initiated, and the polymerization was performed until the polymerization conversion rate reached 35 %.

Then, 0.3 parts by weight of potassium persulfate was added, the temperature was increased to 72 °C, and polymerization was performed until the polymerization conversion rate reached 65 %.

Then, 30 parts by weight of 1,3-butadiene, 0.1 parts by weight of potassium persulfate, and 0.3 parts by weight of oleic acid saponifiable matter were fed, and the reaction was terminated at a polymerization conversion rate of 95 %. At this time, the average particle diameter of the diene-based rubber polymer latex was 1145 Å.

<u><Thickening of diene-based rubber polymer latex></u>

An aqueous solution aqueous solution containing 1.45 parts by weight of acetic acid as an acid thickening agent was added to 100 parts by weight (based on solids) of the prepared diene-based rubber polymer latex to thicken the diene-based rubber polymer latex. At this time, the average particle diameter of the thickened diene-based rubber polymer latex was 3272 Å.

<u><Preparation of vinyl cyanide compound-conjugated diene rubber-aromatic vinyl compound graft copolymer ></u>

The same procedure as in Example 3 was performed.

<u><Preparation of thermoplastic resin composition and specimen for measuring physical properties></u>

The same procedure as in Example 3 was performed.

#### Additional Comparative Example 12

The same procedure was performed as in Example 3, except that, in <Thickening of diene-based rubber polymer latex> of Example 3, the reaction was terminated at a polymerization conversion rate of 91 %. The average particle diameter of the thickened diene-based rubber polymer latex was 3,360 Å.

#### Additional Comparative Example 13

The same procedure was performed as in Example 3, except that, in <Thickening of diene-based rubber polymer latex> of Example 3, 1.3 parts by weight of acetic acid was used. The average particle diameter of the thickened diene-based rubber polymer latex was 3,070 Å.

#### Additional Comparative Example 14

The same procedure was performed as in Example 3, except that, in <Thickening of diene-based rubber polymer latex> of Example 3, 1.7 parts by weight of acetic acid was used. The average particle diameter of the thickened diene-based rubber polymer latex was 3,860 Å.
As described above, specimens were manufactured and the physical properties thereof were measured, and the results are shown in Table 6 below.

[Table 6]

| Classification | Physical properties | Example 3 | Additional Comparative Example 11 | AdditionalComparative Example 12 | AdditionalComparative Example 13 | AdditionalComparative Example 14 |
|---|---|---|---|---|---|---|
| Diene-based rubber polymer | Latex particle circularity | 1.1 | 1.12 | 1.15 | 1.12 | 1.11 |
| | 1.4-BD(Cis) (%) | 24.3 | 24.3 | 24.3 | 24.3 | 24.3 |
| | 1,4-BD(Trans) (%) | 59.6 | 69.5 | 69.5 | 59.6 | 69.5 |
| | 1,2-BD(Vinyl) (%) | 16.1 | 16.1 | 16.1 | 16.1 | 16.1 |
| | Average particle diameter of rubber particles (Å) | 3,350 | 3,272 | 3,360 | 3,070 | 3,860 |
| | Polydisperse particle diameter distribution_ first (wt %) | 52 | 51 | 53 | 66 | 34 |
| | Polydisperse particle diameter distribution_ second (wt %) | 48 | 49 | 47 | 34 | 66 |
| | First:second weight ratio | 1:0.923 | 1:0.960 | 1:0.886 | 1:0.515 | 1:1.941 |
| Graft copolymer | Swelling degree | 13.4 | 9.6 | 18.3 | 13.1 | 13.7 |
| Thermoplastic resin composition | 1/4" impact strength (kgf.cm/cm) | 33.5 | 25.4 | 24.9 | 26.3 | 25.9 |
| | Melting index (g/10 min) | 23.6 | 19.8 | 18.9 | 17.8 | 18.1 |

EP 4 763 875 A1

33

As shown in Table 6, in the case of the diene-based rubber polymer of Example 3 in which the circularity of the latex particles follows the present invention, compared to Additional Comparative Examples 11 to 14 outside the range of the present invention, both impact strength and melting index were significantly improved.

In addition, in the case of Additional Comparative Examples 11 and 12 in which the swelling degree of the graft copolymer is outside the range of the present invention, compared to Example 3, impact strength was significantly reduced, and melting index was also reduced.

In addition, in the case of Additional Comparative Examples 13 and 14 in which the weight ratio of particles present in each distribution section of rubber particles is outside the range of the present invention, compared to Example 3, impact strength was significantly reduced, and melting index was also reduced.

## Example 4

<u>\<Preparation of diene-based rubber polymer\></u>

90 parts by weight of ion-exchange water, 30 parts by weight of 1,3-butadiene, 1 part by weight of oleic acid saponifiable matter, 0.4 parts by weight of potassium carbonate, 0.15 parts by weight of t-dodecyl mercaptan, 0.15 parts by weight of t-butyl hydroperoxide, 0.06 parts by weight of dextrose, 0.005 parts by weight of sodium pyrrolate, and 0.0025 parts by weight of ferrous sulfate were fed into a nitrogen-substituted polymerization reactor batchwise.

Polymerization was performed in the reactor at 55 °C for 5 hours.

Then, polymerization was performed by continuously feeding 70 parts by weight of 1,3-butadiene and 0.3 parts by weight of t-dodecyl mercaptan at a constant speed while increasing temperature to 78 °C. At this time, the continuous feeding was performed for 9 hours.

Then, when the polymerization conversion rate reached 30 to 40 %, 0.1 parts by weight of potassium persulfate and 0.15 parts by weight of a rosin acid emulsifier were fed batchwise.

Then, when the polymerization conversion rate reached 95%, the polymerization was terminated to prepare a diene-based rubber polymer latex. At this time, the average particle diameter of the diene-based rubber polymer latex was 1180 Å, and the half-width was 450 Å.

<u>\<Preparation of graft copolymer\></u>

A first mixture containing 15 parts by weight of acrylonitrile, 30 parts by weight of styrene, 0.4 parts by weight of dimer acid saponifiable matter, 0.35 parts by weight of t-dodecyl mercaptan, and 20 parts by weight of ion-exchange water was prepared.

A second mixture containing 0.12 parts by weight of t-butyl hydroperoxide, 0.054 parts by weight of dextrose, 0.004 parts by weight of sodium pyrrolate, and 0.002 parts by weight of ferrous sulfate was prepared.

55 parts by weight (based on solids) of the diene-based rubber polymer latex and 100 parts by weight of ion-exchange water were fed into a nitrogen-substituted polymerization reactor batchwise.

Then, polymerization was performed while continuously feeding the first and second mixtures into the reactor at 70 °C for 3 hours at a constant speed, respectively.

Then, 0.05 parts by weight of dextrose, 0.03 parts by weight of sodium pyrrolate, 0.001 parts by weight of ferrous sulfate, and 0.05 parts by weight of t-butyl hydroperoxide were fed into the reactor, the temperature of the reactor was increased to 80 °C for 1 hour at a constant rate, and the polymerization was terminated to obtain a graft copolymer latex.

The graft copolymer latex was subjected to coagulation, maturation, washing, dehydration, and drying to obtain graft copolymer powder.

<u>\<Preparation of thermoplastic resin composition\></u>

30 parts by weight of the graft copolymer powder and 70 parts by weight of a styrene-acrylonitrile polymer (LG Chemical Co., weight average molecular weight: 120,000 g/mol) containing 73 % by weight of styrene and 28 % by weight of acrylonitrile were mixed to prepare a thermoplastic resin composition.

## Comparative Example 16

The same procedure was performed as in Example 4, except that, in \<Preparation of diene-based rubber polymer\> of Example 4, 1.6 parts by weight of oleic acid saponifiable matter was added. At this time, the average particle diameter of the obtained diene-based rubber polymer latex was 1,650 Å, and the particle diameter half-width was 560 Å.

**Comparative Example 17**

The same procedure was performed as in Example 4, except that, in <Preparation of diene-based rubber polymer> of Example 4, 0.4 parts by weight of oleic acid saponifiable matter was added. At this time, the average particle diameter of the obtained diene-based rubber polymer latex was 1,170 Å, and the particle diameter half-width was 463 Å.

**Comparative Example 18**

The same procedure was performed as in Example 4, except that, in <Preparation of diene-based rubber polymer> of Example 4, 0.05 parts by weight of potassium carbonate was added. At this time, the average particle diameter of the obtained diene-based rubber polymer latex was 955 Å, and the particle diameter half-width was 296 Å.

**Comparative Example 19**

The same procedure was performed as in Example 4, except that, in <Preparation of diene-based rubber polymer> of Example 4, 0.2 parts by weight of potassium carbonate was added. At this time, the average particle diameter of the obtained diene-based rubber polymer latex was 1,355 Å, and the particle diameter half-width was 612 Å.

**Comparative Example 20**

The same procedure was performed as in Example 4, except that, in <Preparation of diene-based rubber polymer> of Example 4, the reaction temperature was increased from 51 °C to 69 °C. At this time, the average particle diameter of the obtained diene-based rubber polymer latex was 1,210 Å, and the particle diameter half-width was 460 Å.

**Comparative Example 21**

The same procedure was performed as in Example 4, except that, in <Preparation of diene-based rubber polymer> of Example 4, the reaction temperature was increased from 60 °C to 80 °C. At this time, the average particle diameter of the obtained diene-based rubber polymer latex was 1,170 Å, and the particle diameter half-width was 455 Å.

**Comparative Example 22**

The same procedure was performed as in Example 4, except that, in <Preparation of diene-based rubber polymer latex> of Example 4, 0.25 parts by weight of t-butyl hydroperoxide was added. At this time, the average particle diameter of the obtained diene-based rubber polymer latex was 785 Å, and the particle diameter half-width was 326 Å.

**Comparative Example 23**

The same procedure was performed as in Example 4, except that, in <Preparation of diene-based rubber polymer latex> of Example 4, 0.05 parts by weight of t-butyl hydroperoxide was added. At this time, the average particle diameter of the obtained diene-based rubber polymer latex was 1,812 Å, and the particle diameter half-width was 565 Å.

**<Experimental Example 4-1>**

The physical properties of the diene-based rubber polymers of Example 4 and Comparative Examples 16 to 23 were measured as follows.

  1) Microstructure: The ratio (%) of cis-1,4-bond, trans-1,4-bond, and 1,2-bond of the diene-based rubber polymer latex was analyzed using 13C 1D Normal NMR, and the results are shown in Table 7 below.
  2) Monodisperse particle diameter distribution: For the diene-based rubber polymer latex, capillary hydrodynamic fractionation (CHDF) particle diameter distribution was measured using MATEC CHDF 4000 equipment (Mass Applied Science). The particle diameter half-width within the measured distribution section was measured using CHDF (Capillary Hydrodynamic Fractionation) 400 equipment (Mass Applied Science), and the results are shown in the FWHH section of Table 7 below.

The particle diameter half-width refers to the difference between particle diameters that correspond to half of the maximum particle diameter in a particle diameter distribution. As the difference, i.e., particle diameter half-width, increases, the uniformity of rubber particle diameters increases. As a specific example, when fmax is the maximum particle diameter, half of the maximum particle diameter is fmax/2, and the range of particle diameters at two points corresponding to this is the particle diameter half-width.

3) Particle circularity measurement: For the diene-based rubber polymer latex, the ratio of the major axis length to minor axis length of a particle was measured, and the circularity of the particle was calculated based on the average value thereof. Specifically, after each latex was analyzed using TEM equipment (JEM-1400, Jeol), the major axis length and minor axis length of each of 50 particles were measured, and the particle circularity was calculated using Equation 1 below, and the results are shown in Table 7 below.

[Equation 1]

$$\text{Circularity} = \frac{1}{50} \sum_{i=1}^{50} D_i$$

In Equation 1, Di represents the ratio of major axis length to minor axis length [Major axis length/Minor axis length] of an i-th particle.

Specifically, each latex was analyzed by the TEM equipment (JEM-1400, Jeol, 40K) and at least 50 to 100 particles were identified. In the images where 50 particles were identified, the major and minor axis lengths of each particle were measured and the circularity was calculated.

4) Average particle diameter (Å): 0.1 g of the diene-based rubber polymer latex was mixed with 100 g of distilled water, and the intensity value was measured in Gaussian mode by dynamic light scattering using Nicomp 380 equipment (manufacturer: PSS), and the results are shown in Table 7 below.

5) Swelling degree of rubber particles: 1 g of rubber polymer solids was immersed in 100 ml of toluene for 48 hours. When filtered through a 100-mesh wire mesh, the weight of toluene-insoluble matter (weight a) and the weight of vacuum-dried toluene-insoluble matter (weight b) were measured. The swelling degree was calculated by Equation 5 below, and the results are shown in Table 7 below.

Swelling degree = Weight (weight a) of toluene-insoluble matter / Weight (weight b) after vacuum dry-ing                                                      [Equation 5]

**<Experimental Example 4-2>**

The physical properties of the graft copolymer powder of Example 4 and Comparative Examples 16 to 23 were measured as follows.

1) Swelling degree: 2 g of the graft copolymer powder was immersed in 300 ml of acetone and stirred for 24 hours. Insoluble matter was extracted from this solution.

The insoluble matter was immersed in 100 ml of toluene for 48 hours. When filtered through a 100-mesh wire mesh, the weight of toluene-insoluble matter (weight a) and the weight of vacuum-dried toluene-insoluble matter (weight b) were measured. The swelling degree was calculated by Equation 5 below, and the results are shown in Table 7 below.

Swelling degree = Weight (weight a) of toluene-insoluble matter / Weight (weight b) after vacuum dry-ing                                                      [Equation 5]

**<Experimental Example 4-3>**

100 parts by weight of the thermoplastic resin composition of Example 4 and Comparative Examples 16 to 23 was mixed with 1 part by weight of a lubricant and 0.1 parts by weight of a heat stabilizer, and kneading and extrusion was performed at 210 °C and 160 rpm to obtain pellets.

The obtained pellets were injected using an injection molding machine (injection temperature: 230 °C, injection pressure: 80 bar, Engel ES 200/45 HL-Pro Series), followed by drying at 25 °C and a relative humidity of 50±5 °C for 12 hours to manufacture specimens.

The physical properties of the specimens were measured using the methods described below.

1) Impact strength: For the obtained specimens, the Izod impact strength (unit: kgf·cm/cm) was measured at a thickness of 1/4" using a Tinius Olsen (product name: Model Impact 104, manufacturer: Tinius Olsen test machine company) according to ASTM D256, and the results are shown in Table 7 below.

2) Melting index: For the obtained specimens, the melting index (unit: g/10 min) was measured at 220 °C under a load of 10 kg according to ASTM 648, and the results are shown in Table 7 below.

3) Gloss: For the obtained specimens, the gloss was measured at 45° using a gloss meter according to ASTM D528, and the results are shown in Table 7 below. As the value increases, the surface gloss improves.

[Table 7]

| Classification | Physical properties | Example 4 | Comparative Example 16 | Comparative Example 17 | Comparative Example 18 | Comparative Example 19 | Comparative Example 20 | Comparative Example 21 | Comparative Example 22 | Comparative Example 23 |
|---|---|---|---|---|---|---|---|---|---|---|
| Diene-based rubber polymer | Latex particle circularity | 1.0 6 | 1.55 | 1.02 | 1.05 | 1.15 | 1.1 | 1.12 | 1.07 | 1.35 |
| | 1.4-BD(Cis) (%) | 23. 3 | 23.3 | 23.3 | 23.3 | 23.3 | 19.8 | 30.3 | 23.5 | 23.8 |
| | 1,4-BD(Trans ) (%) | 60. 8 | 60.8 | 60.8 | 60.8 | 60.8 | 65.1 | 54.4 | 60.1 | 59.8 |
| | 1,2-BD(Vinyl ) (%) | 15. 9 | 15.9 | 15.9 | 15.9 | 15.9 | 15.1 | 15.3 | 16.4 | 16.4 |
| | Swelling degree | 7.8 | 8.0 | 7.8 | 7.7 | 7.9 | 7.8 | 8.0 | 8.0 | 8.1 |
| | Average particle diameter of rubber particles (Å) | 1, 1 80 | 1, 65 0 | 1, 17 0 | 955 | 1,35 5 | 1,21 0 | 1,17 0 | 785 | 1, 81 2 |
| | Monodisperse particle diameter distribution_(FW HH) | 450 | 560 | 463 | 296 | 612 | 460 | 455 | 326 | 565 |
| Graft copolymer | Swelling degree | 14. 8 | 14.6 | 14.4 | 13.8 | 14.7 | 13.9 | 14.4 | 13.8 | 14.1 |
| Thermo plastic resin composition | 1/4" impact strength (kgf.cm/cm) | 5.1 | 3.5 | 1.5 | 1.2 | 1.9 | 1.6 | 3.5 | 1.3 | 3.7 |
| | Melting index (g/10 min) | 13. 8 | 7.2 | 7.1 | 3.5 | 8.5 | 7.1 | 7.3 | 5.6 | 4.9 |
| | Gloss (45°) | 99 | 85 | 92 | 92 | 87 | 86 | 88 | 85 | 81 |

As shown in Table 4, in the case of the diene-based rubber polymer of Example 4 in which the circularity of the latex particles follows the present invention, compared to Comparative Examples 16 to 23 outside the range of the present invention, impact strength was greatly improved, and melting index and gloss were significantly improved.

In addition, in the case of Comparative Examples 16 and 17 in which the circularity is outside the range of the present invention, compared to Example 4, impact strength was significantly reduced, and melting index and gloss were reduced.

In addition, in the case of Comparative Examples 18 and 19 in which the average particle diameter is outside the range of the present invention, compared to Example 4, impact strength was significantly reduced, and melting index and gloss were reduced.

In addition, in the case of Comparative Examples 20 and 21 in which the microstructure is outside the range of the present invention, compared to Example 4, impact strength was significantly reduced, and melting index and gloss were reduced.

In addition, in the case of Comparative Examples 22 and 23 in which the average particle diameter is outside the range of the present invention, compared to Example 4, impact strength was significantly reduced, and melting index and gloss were reduced.

In particular, it was confirmed that the thermoplastic resin composition according to the present invention has excellent physical property balance between impact resistance and fluidity due to excellent impact strength and melting index. In addition, the thermoplastic resin composition exhibited a gloss of 95 or more at 45°, and thus is suitable for products requiring high gloss. In addition, the thermoplastic resin composition exhibited a uniform sphere form having a circularity of 1.06.

In addition, FIG. 4 below is a diagram showing a particle diameter distribution. As shown in FIG. 4 below, a monodisperse dispersion was observed.

**<Experimental Example 4-4>**

**Additional Comparative Example 15**

<Preparation of diene-based rubber polymer latex>

75 parts by weight of ion-exchange water, 90 parts by weight of 1,3-butadiene as a conjugated diene compound based on 100 parts by weight in total, 3 parts by weight of dimer acid saponifiable matter as an emulsifier, 0.1 parts by weight of potassium carbonate ($K_2CO_3$) as an electrolyte, 0.1 parts by weight of tertiary dodecyl mercaptan (TDDM) as a molecular weight regulator, 0.15 parts by weight of tertiary butyl hydroperoxide as initiator, 0.06 parts by weight of dextrose, 0.005 parts by weight of sodium pyrrolate, and 0.0025 parts by weight of ferrous sulfate were fed into a nitrogen-substituted polymerization reactor (autoclave) batchwise, reaction was performed at a reaction temperature of 55 °C until the polymerization conversion rate reached 30 to 40 %, 0.3 % by weight of potassium persulfate was fed thereto batchwise, the temperature was increased to 72 °C, 10 parts by weight of remaining 1,3-butadiene was fed thereto batchwise at a polymerization conversion rate of 60 to 70 %, and the reaction was terminated at a polymerization conversion rate of 95 %. At this time, the average particle diameter of the obtained diene-based rubber polymer latex was 1,155 Å, and the particle diameter half-width was 447 Å.

<Preparation of graft copolymer> and <Preparation of thermoplastic resin composition>

Each procedure was performed in the same manner as in Example 4.

**Additional Comparative Example 16**

The same procedure was performed as in Example 4, except that, in <Preparation of diene-based rubber polymer latex> of Example 4, the reaction was terminated at a polymerization conversion rate of 90 %. At this time, the average particle diameter of the obtained diene-based rubber polymer latex was 1,120 Å, and the particle diameter half-width was 452 Å.

As described above, specimens were manufactured and the physical properties thereof were measured, and the results are shown in Table 8 below.

[Table 8]

| Classification | Physical properties | Example 4 | Additional Comparative Example 15 | Additional Comparative Example 16 |
|---|---|---|---|---|
| Diene-based rubber polymer | Latex particle circularity | 1.06 | 1.07 | 1.08 |
| | 1.4-BD(Cis) (%) | 23.3 | 23.3 | 23.3 |
| | 1,4-BD(Trans) (%) | 60.8 | 60.8 | 60.8 |
| | 1,2-BD(Vinyl) (%) | 15.9 | 15.9 | 15.9 |
| | Swelling degree | 7.8 | 3.8 | 12.3 |
| | Average particle diameter of rubber particles (Å) | 1,180 | 1,155 | 1,120 |
| | Monodisperse particle diameter distribution_(FWHH) | 450 | 447 | 452 |
| Graft copolymer | Swelling degree | 14.8 | 14.3 | 14.4 |
| Thermoplastic resin composition | 1/4" impact strength (kgf.cm/cm) | 5.1 | 2.9 | 2.3 |
| | Melting index (g/10 min) | 13.8 | 5.4 | 6.8 |
| | Gloss (45°) | 99 | 91 | 92 |

As shown in Table 8, in the case of the diene-based rubber polymer of Example 4 in which the circularity of the latex particles follows the present invention, compared to Additional Comparative Examples 15 and 16 outside the range of the present invention, impact strength was greatly improved, and melting index and gloss were significantly improved.

For reference, in the case of Comparative Examples 15 and 16 in which the swelling degree is outside the range of the present invention, compared to Example 4, impact strength was significantly reduced, and melting index and gloss were reduced.

In conclusion, the diene-based rubber polymer according to the present invention has a predetermined polydisperse particle diameter distribution. The microstructure, average particle diameter, and circularity of the diene-based rubber polymer and the swelling degree of the graft copolymer may be easily controlled, thereby providing excellent physical property balance between impact resistance and fluidity. In addition, the diene-based rubber polymer may be applied to products requiring impact resistance, products requiring high gloss, or products requiring high fluidity.

**Claims**

1. A diene-based rubber polymer comprising a microstructure containing 20 to 30 % of a cis-1,4-bond, 55 to 65 % of a trans-1,4-bond, and a remaining amount of a 1,2-bond, having a first particle diameter distribution section of 200 Å to 3,000 Å, having an average particle diameter of 3,000 to 4,000 Å or 800 to 1,800 Å, and having a circularity of 1.03 to 1.5 as calculated by Equation 1 below.

[Equation 1]

$$\text{Circularity} = \frac{1}{50} \sum_{i=1}^{50} D_i \quad ,$$

wherein $D_i$ is a ratio [Major axis length/Minor axis length] of a length of a major axis to a length of a minor axis in an i-th particle in latex.

2. The diene-based rubber polymer according to claim 1, wherein the diene-based rubber polymer has a second particle diameter distribution section of 1,800 Å to 8,000 Å.

3. The diene-based rubber polymer according to claim 1, wherein a weight ratio (first:second) of particles contained in the first particle diameter distribution section to particles contained in the second particle diameter distribution section is 1:0.60 to 1:0.97.

4. The diene-based rubber polymer according to claim 1, wherein, in an entire particle diameter distribution section exhibited by the diene-based rubber polymer, the first particle diameter distribution section exhibits a polydisperse particle diameter distribution of 15 to 75 %, and the second particle diameter distribution section exhibits a polydisperse particle diameter distribution of 25 to 85 %.

5. The diene-based rubber polymer according to claim 1, wherein the polydisperse particle diameter distribution is a measurement value of a diene-based rubber polymer in a latex form or a measurement value of an acid-thickening treatment product thereof.

6. The diene-based rubber polymer according to claim 1, wherein the first particle diameter distribution section has a first particle diameter distribution section of 200 Å to 1,800 Å and a second particle diameter distribution section of 1,800 Å to 8,000 Å, the first particle diameter distribution section is within a range of 45 to 75 %, the second particle diameter distribution section is within a range of 25 to 55 %, and an average particle diameter is within a range of 3,000 to 4,000 Å.

7. The diene-based rubber polymer according to claim 1, wherein the first particle diameter distribution section has a first particle diameter distribution section of 1,500 Å to 3,000 Å and a second particle diameter distribution section of 3,000 Å to 8,000 Å, the first particle diameter distribution section is within a range of 15 to 40 %, the second particle diameter distribution section is within a range of 60 to 85 %, and an average particle diameter is within a range of 3,000 to 4,000 Å.

8. The diene-based rubber polymer according to claim 1, wherein the first particle diameter distribution section has a first particle diameter distribution section of 1,500 Å to 3,000 Å and a second particle diameter distribution section of 3,000 Å to 8,000 Å, the first particle diameter distribution section is within a range of 35 to 65 %, the second particle diameter distribution section is within a range of 35 to 65 %, and an average particle diameter is within a range of 3,000 to 4,000 Å.

9. The diene-based rubber polymer according to claim 1, wherein the first particle diameter distribution section has a monodisperse particle diameter distribution section of 300 Å to 600 Å, an average particle diameter is within a range of 800 to 1,800 Å, and a swelling degree is within a range of 4 to 12.

10. A method of preparing a diene-based rubber polymer, comprising preparing a diene-based rubber polymer latex by emulsion polymerization of a conjugated diene compound; and obtaining a diene-based rubber polymer by acid-thickening treatment of the diene-based rubber polymer latex,
wherein the acid-thickening treatment is performed using one or more acid-thickening treatment agents selected from acetic acid, formic acid, citric acid, phosphoric acid, dihydrophosphoric acid, and hydrophosphoric acid.

11. A graft copolymer comprising the diene-based rubber polymer according to claim 1.

12. The graft copolymer according to claim 10, wherein the diene-based rubber polymer is comprised in the graft copolymer in an amount of 3 to 80 % by weight.

13. The graft copolymer according to claim 10, wherein the graft copolymer has a swelling degree of 8 to 20.

14. A thermoplastic resin composition comprising the graft copolymer according to claim 10.

15. A molded article comprising the thermoplastic resin composition according to claim 14.

EP 4 763 875 A1

[FIG. 1]

[FIG. 2]

42

[FIG. 3]

[FIG. 4]

## INTERNATIONAL SEARCH REPORT

| International application No. |
|---|
| **PCT/KR2024/017318** |

**A. CLASSIFICATION OF SUBJECT MATTER**

**C08F 36/04**(2006.01)i; **C08F 136/06**(2006.01)i; **C08F 2/22**(2006.01)i; **C08F 6/18**(2006.01)i; **C08F 279/04**(2006.01)i; **C08L 55/02**(2006.01)i; **C08F 2/38**(2006.01)i

According to International Patent Classification (IPC) or to both national classification and IPC

**B. FIELDS SEARCHED**

Minimum documentation searched (classification system followed by classification symbols)

C08F 36/04(2006.01); B29B 11/10(2006.01); C08F 279/00(2006.01); C08F 279/04(2006.01); C08L 23/00(2006.01); C08L 47/00(2006.01); C08L 51/04(2006.01); C08L 9/00(2006.01); G03G 15/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 시스-1,4 결합(cis-1,4 bond), 트랜스-1,4 결합(trans-1,4 bond), 마이크로 구조 (microstructure), 디엔계 고무질 중합체(diene rubber polymer), 다분산(polydispersity), 제1 입경 분포(first particle size distribution), 제2 입경 분포(second particle size distribution), 그라프트 공중합체(graft copolymer), 열가소성 수지 조성물 (thermoplastic resin composition)

**C. DOCUMENTS CONSIDERED TO BE RELEVANT**

| Category* | Citation of document, with indication, where appropriate, of the relevant passages | Relevant to claim No. |
|---|---|---|
| Y | US 2013-0243500 A1 (LEXMARK INTERNATIONAL, INC.) 19 September 2013 (2013-09-19) See paragraphs [0029], [0030] and [0082]. | 1-9,11-15 |
| A | | 10 |
| X | KR 10-2022-0054176 A (LG CHEM, LTD.) 02 May 2022 (2022-05-02) See paragraphs [0022], [0024], [0090], [0096], [0125], [0141], [0154], [0155], [0196] and [0197]; claim 11; and figure 2. | 10 |
| Y | | 1-9,11-15 |
| A | JP 2005-082717 A (QIMEI INDUSTRY CO., LTD.) 31 March 2005 (2005-03-31) See entire document. | 1-15 |

☑ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 February 2025** | **10 February 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2024/017318** |

| C. | DOCUMENTS CONSIDERED TO BE RELEVANT | |
|---|---|---|
| Category* | Citation of document, with indication, where appropriate, of the relevant passages | Relevant to claim No. |
| A | KR 10-0841792 B1 (UBE INDUSTRIES, LTD.) 27 June 2008 (2008-06-27)<br>See entire document. | 1-15 |
| A | US 4713420 A (HENTON, David E.) 15 December 1987 (1987-12-15)<br>See entire document. | 1-15 |

Form PCT/ISA/210 (second sheet) (July 2022)

## INTERNATIONAL SEARCH REPORT
### Information on patent family members

International application No.

**PCT/KR2024/017318**

| Patent document cited in search report | | | Publication date (day/month/year) | Patent family member(s) | | | Publication date (day/month/year) |
|---|---|---|---|---|---|---|---|
| US | 2013-0243500 | A1 | 19 September 2013 | US | 2010-0003610 | A1 | 07 January 2010 |
| | | | | US | 8448336 | B2 | 28 May 2013 |
| KR | 10-2022-0054176 | A | 02 May 2022 | CN | 115279807 | A | 01 November 2022 |
| | | | | CN | 115279807 | B | 30 January 2024 |
| | | | | EP | 4095174 | A1 | 30 November 2022 |
| | | | | EP | 4095174 | A4 | 23 August 2023 |
| | | | | KR | 10-2673191 | B1 | 10 June 2024 |
| | | | | US | 2023-0134396 | A1 | 04 May 2023 |
| | | | | WO | 2022-085913 | A1 | 28 April 2022 |
| JP | 2005-082717 | A | 31 March 2005 | None | | | |
| KR | 10-0841792 | B1 | 27 June 2008 | EP | 1693411 | A1 | 23 August 2006 |
| | | | | EP | 1693411 | A4 | 11 November 2009 |
| | | | | EP | 1693411 | B1 | 30 April 2014 |
| | | | | JP | 3981841 | B2 | 26 September 2007 |
| | | | | KR | 10-2006-0135655 | A | 29 December 2006 |
| | | | | US | 2008-0233399 | A1 | 25 September 2008 |
| | | | | US | 2010-0152389 | A1 | 17 June 2010 |
| | | | | US | 7700691 | B2 | 20 April 2010 |
| | | | | US | 7863385 | B2 | 04 January 2011 |
| | | | | WO | 2005-056663 | A1 | 23 June 2005 |
| US | 4713420 | A | 15 December 1987 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230151820
- KR 1020230151821
- KR 1020230151817
- KR 1020230151816
- KR 1020240155234
- KR 1020240155370
- KR 1020240155371
- KR 1020240155233
- JP HEI11130825 B